# EUROPEAN PATENT SPECIFICATION

(11) **EP 2 595 043 B1**
(45) Date of publication and mention of the grant of the patent: **05.05.2021**
(21) Application number: 12193085.3
(22) Date of filing: 16.11.2012
(51) Int. Cl.: G06F 3/0481, G06F 3/0482, G06F 3/0484, G06F 3/0488, G06F 9/451

(54) **Mobile device for executing multiple applications and method thereof**
Mobile Vorrichtung zur Ausführung mehrfacher Anwendungen und Verfahren dafür
Dispositif mobile pour exécuter des applications multiples et procédé associé

(30) Priority: 16.11.2011 KR 20110119877
(43) Date of publication of application: 22.05.2013
(73) Proprietor: Samsung Electronics Co., Ltd., Gyeonggi-do 443-742 (KR)
(72) Inventor: Kim, Kang-Tae, 443-742 Gyeonggi-do (KR); Kim, Eun-Young, 443-742 Gyeonggi-do (KR); Kim, Chul-Joo, 443-742 Gyeonggi-do (KR); Sun, Kwang-Won, 443-742 Gyeonggi-do (KR)
(74) Representative: HGF

(56) References cited:
- US-A1- 2008 158 189
- US-A1- 2010 248 788
- US-A1- 2011 099 508
- US-A1- 2011 173 556
- Greg Shultz: "News, Tips, and Advice for Technology Professionals - TechRepublic", , 2 December 2009 (2009-12-02), XP055593430, Retrieved from the Internet: URL:https://www.techrepublic.com/blog/wind ows-and-office/take-full-advantage-of-jump -lists-in-windows-7-with-these-tips/ [retrieved on 2019-06-03]
- Brian Burgess: "Beginner: Group Similar Apps Using Folders on Your iOS 4 iPhone or iPod Touch", , 27 September 2010 (2010-09-27), XP055593425, Retrieved from the Internet: URL:https://www.howtogeek.com/howto/29898/ beginner-group-similar-apps-using-folders- on-your-ios-4-iphone-or-ipod-touch/ [retrieved on 2019-06-03]

## Description

### BACKGROUND OF THE INVENTION

### 1. Field of the Invention:

The present invention relates to a mobile device for executing multiple applications and a method thereof. More particularly, the present invention relates to a mobile device for efficiently executing multiple applications using a User Interface (UI) configured on a touch screen and a method thereof.

### 2. Description of the Related Art:

A desktop computer is equipped with at least one display device (e.g. a monitor). A mobile device having a touch screen (e.g. a portable phone, a smart phone, or a tablet PC) has a single display device.

A desktop user can divide the screen of a display device according to an operation environment, for example, by dividing the screen horizontally or vertically into a plurality of windows. When a Web browser is executed, the user can move up or down on a Web page using a page-up button or a page-down button of a keyboard. If using a mouse instead of the keyboard, the user can scroll up or down a Web page by selecting a scroll bar using the cursor of the mouse. In addition, the user can move to the top of the Web page by selecting a top button displayed in the form of text or an icon at the bottom of the Web page.

Compared to the desktop computer, a mobile device has a small screen size and suffers from input limitations. Moreover, it is difficult to divide the screen of the mobile device.

The mobile device can execute various applications including basic applications developed and installed by the manufacturer of the mobile device and additional applications downloaded from Internet application store sites. Ordinary users may develop such additional applications and register them to application store sites. Therefore, anyone can sell his or her developed application freely to mobile users on application store sites. As a result, tens of thousands to hundreds of thousands of free or paid applications are provided to mobile devices.

Although a variety of applications that interest consumers or satisfy their demands have been provided to mobile devices, the mobile devices are restricted in display size and UIs because they are manufactured to portable sizes. Therefore, users experience inconvenience in executing a plurality of applications. For example, when one application is executed in a mobile device, the application is displayed in full screen on the display of the mobile device. If the user wants to execute another application, the user should first terminate the on-going application and then select an execution key to execute another application. To execute a plurality of applications in the mobile device, the user should repeat execution and termination of each application with inconvenience. Moreover, there is no specified method for simultaneously executing a plurality of applications according to the present invention in the mobile device.

US 2010/0248788 A1 discloses a method and mobile terminal that can divide the screen into individual divided screen areas and simultaneously present user functions on the individual divided screen areas. In one embodiment, a mobile terminal can display a plurality of menu items on the screen in response to an input signal. The plurality of menu items can include a dual menu item. When a dual menu item is activated, the screen is divided into two areas and two functional view areas as to two menus are displayed on the two areas. For example, when a user selects a dual menu item "AB", the mobile terminal can activate application programs related to menu items A and B, display a first functional view area as to the application program related to the menu item A on a divided screen area, and display a second functional view area as to the application program related to the menu item B on the other divided screen area.

US 2008/158189 A1 discloses a mobile terminal including a display unit of a touch screen type divided into at least one of first and second display regions; and a controller that performs a particular function or re-adjusts a divisional boundary between the first and second display regions according to a user's instruction sensed from the display unit.

US 2011/099508 A1 discloses a method for initializing a mobile device to support a multitasking environment, and synchronously executing multiple software applications in the multitasking environment. The method generates a user interface on a home screen of the mobile device, and divides the user interface into multiple display areas according to a total number of the executed software applications.

US 2011/173556 A1 discloses a system and method for managing the control and display of software application windows in a graphical user environment. In one embodiment, each of a plurality of instantiated programs is represented as one or more graphical windows displayed on a desktop portion and as one or more control tiles displayed on a taskbar portion. Control tiles corresponding to instantiated program windows may be organized within the taskbar as a group. The grouping of control tiles can include a group control tile that identifies the control tile group. According to another embodiment, control tile groups may be organised into a specific type of group, referred to as a project group. Project groups may be saved for subsequent access.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide a mobile device for simultaneously executing a plurality of applications as defined in claim 1 and a method therefor as defined in claim 6. The dependent claims define further advantageous embodiments.

Other aspects, advantages, and salient features of the invention will become apparent to those skilled in the art from the following detailed description, which, taken in conjunction with the annexed drawings, discloses exemplary embodiments of the invention and other aspects of the present disclosure.

### BRIEF DESCRIPTION OF THE DRAWINGS

The above and other aspects, features, and advantages of certain exemplary embodiments of the present invention will be more apparent from the following description taken in conjunction with the accompanying drawings, in which:
FIG. 1 is a block diagram of a mobile device according to an exemplary embodiment of the present invention;
FIG. 2 is a perspective view of a mobile device according to the exemplary embodiment of the present invention;
FIG. 3 is a flowchart illustrating a method for executing multiple applications according to an exemplary aspect of the present disclosure;
FIGs. 4A, 4B and 4C illustrate a multi-application panel according to another aspect of the present disclosure;
FIGs. 5A and 5B illustrate layouts of a plurality of applications according to another aspect of the present disclosure;
FIGs. 6A and 6B illustrate screens for executing a plurality of applications according to another aspect of the present disclosure;
FIGs. 7A and 7B illustrate layouts of a plurality of applications according to another aspect of the present disclosure;
FIGs. 8A and 8B illustrate screens for executing a plurality of applications according to another aspect of the present disclosure;
FIG. 9 is a flowchart illustrating a method for executing multiple applications according to an exemplary embodiment of the present invention;
FIGs. 10A, 10B and 10C illustrate multiple application panels according to another exemplary embodiment of the present invention;
FIGs. 11A, 11B and 11C illustrate multiple application panels according to another exemplary embodiment of the present invention;
FIG. 12 is a flowchart illustrating a method for changing a multi-application set according to another aspect of the present disclosure;
FIG. 13 illustrates a method for changing a multi-application set according to another aspect of the present disclosure;
FIG. 14 illustrates a method for changing a multi-application set according to another aspect of the present disclosure;
FIGs. 15A to 15D illustrate a method for controlling a screen in which multiple applications are executed in a mobile device according to another aspect of the present disclosure;
FIGs. 16A to 16D illustrate a method for controlling a screen in which multiple applications are executed in a mobile device according to another aspect of the present disclosure;
FIGs. 17A to 17D illustrate a method for controlling a screen in which multiple applications are executed in a mobile device according to another aspect of the present disclosure;
FIGs. 18A to 18F illustrate a method for controlling a screen in which multiple applications are executed in a mobile device according to another aspect of the present disclosure; and
FIGs. 19A to 19D illustrate a method for controlling a screen in which multiple applications are executed in a mobile device according to another aspect of the present disclosure.

Throughout the drawings, like reference numerals will be understood to refer to the same elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims. It includes various specific details to assist in that understanding, but these are to be regarded as merely exemplary. Accordingly, those of ordinary skill in the art will recognize that various changes and modifications of the embodiments described herein can be made without departing from the scope of the invention. In addition, descriptions of well-known functions and constructions may be omitted for clarity and conciseness.

The terms and words used in the following description and claims are not limited to the bibliographical meanings, but are merely used by the inventor to enable a clear and consistent understanding of the invention. Accordingly, it should be apparent to those skilled in the art that the following description of exemplary embodiments of the present invention is provided for illustration purposes only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

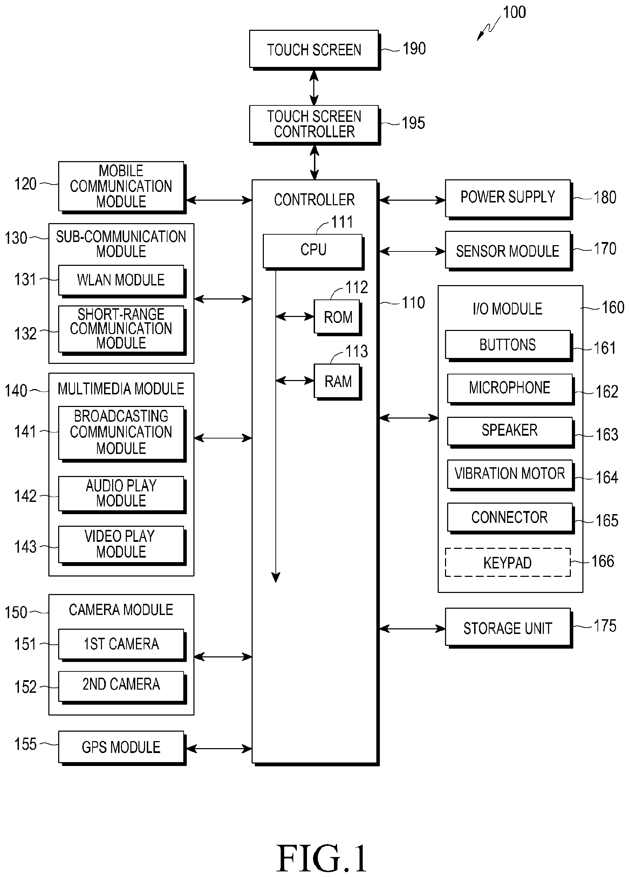

FIG. 1 is a block diagram of a mobile device according to an exemplary embodiment of the present invention.

Referring to FIG. 1, a mobile device 100 may be connected to an external device (not shown) through a mobile communication module 120, a sub-communication module 130, and a connector 165. The term "external device" may include a variety of devices such as a desktop device (not shown), a portable phone (not shown), a smart phone (not shown), a tablet PC (not shown), and a server (not shown).

The mobile device 100 includes a touch screen 190 and a touch screen controller 195. The mobile device 100 further includes a controller 110, the mobile communication module 120, the sub-communication module 130, a multimedia module 140, a camera module 150, a Global Positioning System (GPS) module 155, an Input/Output (I/O) module 160, a sensor module 170, a storage unit 175, and a power supply 180. The sub-communication module 130 includes at least one of a Wireless Local Area Network (WLAN) module 131 and a short-range communication module 132, and the multimedia module 140 includes at least one of a broadcasting communication module 141, an audio play module 142, and a video play module 143.

The camera module 150 includes at least one of a first camera 151 and a second camera 152, and the I/O module 160 includes at least one of buttons 161, a microphone 162, a speaker 163, a vibration motor 164, the connector 165, and a keypad 166.

The controller 110 may include a CPU 111, a ROM 112 that stores a control program to control the mobile device 100, and a RAM 113 that stores a signal or data received from the outside of the mobile device 100 or that is used as a memory space for an operation performed by the mobile device 100. The CPU 111 may include a single core, dual cores, triple cores, or quad cores. The CPU 111, the ROM 112, and the RAM 113 may be connected to one other through an internal bus.

The controller 110 controls the mobile communication module 120, the sub-communication module 130, the multimedia module 140, the camera module 150, the GPS module 155, the I/O module 160, the sensor module 170, the storage unit 175, the power supply 180, a first touch screen 190a, a second touch screen 190b, and the touch screen controller 195.

The mobile communication module 120 connects the mobile device 100 to an external device through one antenna or more antennas (not shown) by mobile communication under the control of the controller 110. The mobile communication module 120 transmits or receives a wireless signal to or from a portable phone (not shown), a smart phone (not shown), a tablet PC (not shown), or another mobile device (not shown) that has a phone number input to the mobile device 100, in order to conduct a voice call or a video call or to provide a Short Message Service (SMS), or a Multimedia Messaging Service (MMS).

The sub-communication module 130 may include at least one of the WLAN module 131 and the short-range communication module 132. For example, the sub-communication module 130 may include the WLAN module 131 or the short-range communication module 132 alone or both.

The WLAN communication module 131 may be connected to the Internet under the control of the controller 110 in a place where a wireless Access Point (AP) (not shown) is installed. The WLAN communication module 131 supports the WLAN standard IEEE802.11x of the Institute of Electrical and Electronics Engineers (IEEE). The short-range communication module 132 may wirelessly perform short-range communication between the mobile device 100 and an image forming device (not shown) under the control of the controller 110. Short-range communication schemes may include Bluetooth, Infrared Data Association (IrDA), Near Field Communication (NFC) etc.

The mobile device 100 may include at least one of the mobile communication module 120, the WLAN module 131, and the short-range communication module 132 according to its capabilities. For example, the mobile device 100 may include a combination of the mobile communication module 120, the WLAN module 131, and the short-range communication module 132 according to its capabilities.

The multimedia module 140 may include the broadcasting communication module 141, the audio play module 142, or the video play module 143. The broadcasting communication module 141 may receive a broadcast signal (for example, a TV broadcast signal, a radio broadcast signal, or a data broadcast signal) and additional broadcasting information (for example, an Electric Program Guide (EPG) or Electric Service Guide (ESG)) from a broadcasting station through a broadcasting communication antenna (not shown) under the control of the controller 110. The audio play module 142 may open and reproduce a stored or received digital audio file (for example, a file having a filename extension of mp3, wma, ogg, or wav) under the control of the controller 110. The video play module 143 may open and reproduce a stored or received digital video file (for example, a file having a filename extension of mpeg, mpg, mp4, avi, mov, or mkv) under the control of the controller 110. The video play module 143 can open a digital audio file.

The multimedia module 140 may include the audio play module 142 and the video play module 143 except for the broadcasting communication module 141. Alternatively, the audio play module 142 or the video play module 143 of the multimedia module 140 may be incorporated into the controller 110.

The camera module 150 may include at least one of the first camera 151 and the second camera 152, for capturing a still image or a video under the control of the controller 110. The first camera 151 or the second camera 152 may include an auxiliary light source (for example, a flash (not shown)) for providing a light intensity required for capturing an image. The first camera 151 may be disposed on the front surface of the mobile device 100, and the second camera 152 may be disposed on the rear surface of the device 100. Alternatively, the first camera 151 and the second camera 152 may be arranged near to each other (for example, the distance between the first camera 151 and the second camera 152 is larger than 1 cm and smaller than 8 cm) in order to capture a three-dimensional still image or video.

The GPS module 155 may receive radio waves from a plurality of GPS satellites (not shown) in Earth orbit and calculate a position of the mobile device 100 based on the Time of Arrival (ToA) of satellite signals from the GPS satellites to the mobile device 100.

The I/O module 160 may include at least one of a plurality of buttons 161, the microphone 162, the speaker 163, the vibration motor 164, the connector 165, and the keypad 166.

The buttons 161 may be formed on the front surface, a side surface, or the rear surface of a housing of the mobile device 100, and may include at least one of a power/lock button (not shown), a volume button (not shown), a menu button, a home button, a back button, and a search button.

The microphone 162 receives voice or sound and converts the received voice or a sound to an electrical signal under the control of the controller 110.

The speaker 163 may output sounds corresponding to various signals (for example, a wireless signal, a broadcasting signal, a digital audio file, a digital video file, photo taking, etc.) received from the mobile communication module 120, the sub-communication module 130, the multimedia module 140, and the camera module 150 to the outside of the mobile device 100. The speaker 163 may output sounds corresponding to functions (for example, a button control sound or a ring back tone for a call) performed by the mobile device 100. One or more speakers 163 may be formed at an appropriate position or positions of the housing.

The vibration motor 164 may convert an electrical signal to a mechanical vibration under the control of the controller 110. For example, when the mobile device 100 receives an incoming voice call from another mobile device (not shown) in vibration mode, the vibration motor 164 operates. One or more vibration motors 164 may be mounted inside the housing of the mobile device 100. The vibration motor 164 may operate in response to a user's touch on the touch screen 190 and a continuous movement of the touch on the touch screen 190.

The connector 165 may be used as an interface for connecting the mobile device 100 to an external device (not shown) or a power source (not shown). The connector 165 may transmit data stored in the storage unit 175 to the external device via a cable connected to the connector 165 or may receive data from the external device, under the control of the controller 110. Power may be supplied or a battery (not shown) may be charged from the power source via the cable connected to the connector 165.

The keypad 166 may receive a key input from the user to control the mobile device 100. The keypad 166 includes a physical keypad (not shown) formed in the mobile device 100 or a virtual keypad (not shown) displayed on the touch screen 190. The physical keypad may be omitted according to the capabilities or configuration of the mobile device 100.

The sensor module 170 includes at least one sensor for detecting a state of the mobile device 100. For example, the sensor module 170 may include a proximity sensor for determining whether the user is close to the mobile device 100, an illumination sensor (not shown) for detecting the amount of ambient light around the mobile device 100, or a motion sensor (not shown) for detecting a motion of the mobile device 100 (for example, rotation, acceleration or vibration of the mobile device 100). At least one sensor may detect a state of the mobile device 100, generate a signal corresponding to the detected state, and transmit the generated signal to the controller 110. A sensor may be added to or removed from the sensor module 170 according to the capabilities of the mobile device 100.

The storage unit 175 may store input/output signals or data in accordance with operations of the mobile communication module 120, the sub-communication module 130, the multimedia module 140, the camera module 150, the GPS module 155, the I/O module 160, the sensor module 170, and the touch screen 190 under the control of the controller 110. The storage unit 175 may store a control program for controlling the mobile device 100 or the controller 110, and applications.

The term "storage unit" may include the storage unit 175, the ROM 112 or the RAM 113 within the controller 110, or a memory card (not shown) (for example, an SD card or a memory stick) mounted to the mobile device 100. The storage unit may include a non-volatile memory, a volatile memory, a Hard Disk Drive (HDD), or a Solid State Drive (SSD).

The power supply 180 may supply power to one or more batteries (not shown) disposed in the housing of the mobile device 100 under the control of the controller 110. The one or more batteries supply power to the mobile device 100. Further, the power supply 180 may supply power received from an external power source (not shown) via the cable connected to the mobile device 100 via the connector 165.

The touch screen 190 may provide User Interfaces (UIs) corresponding to various services (for example, call, data transmission, broadcasting, and photography) to the user. The touch screen 190 may transmit an analog signal corresponding to at least one touch on a UI to the touch screen controller 195. The touch screen 190 may receive at least one touch input through a user's body part (for example, a finger) or a touch input tool (for example, a stylus pen). The touch screen 190 may receive a touch input signal corresponding to a continuous movement of a touch among one or more touches. The touch screen 190 may transmit an analog signal corresponding to the continuous movement of the input touch to the touch screen controller 195.

According to exemplary embodiments of the present invention, 'touch' may include a non-contact touch (for example, the detectable gap between the touch screen 190 and the user's body part or the touch input tool is equal to or smaller than 1 mm), and need not be limited to contact between the touch screen 190 and the user's body part or the touch input tool. The detectable gap of the touch screen 190 may vary according to the capabilities or configuration of the mobile device 100.

The touch screen 190 may be implemented into, for example, a resistive type, a capacitive type, an infrared type, or an acoustic wave type.

The touch screen controller 195 converts an analog signal received from the touch screen 190 to a digital signal (for example, X and Y coordinate). The controller 110 may control the touch screen 190 using the digital signal received from the touch screen controller 195. For example, the controller 110 may control selection or execution of a shortcut icon (not shown) displayed on the touch screen 190 in response to a touch. The touch screen controller 195 may be incorporated into the controller 110.

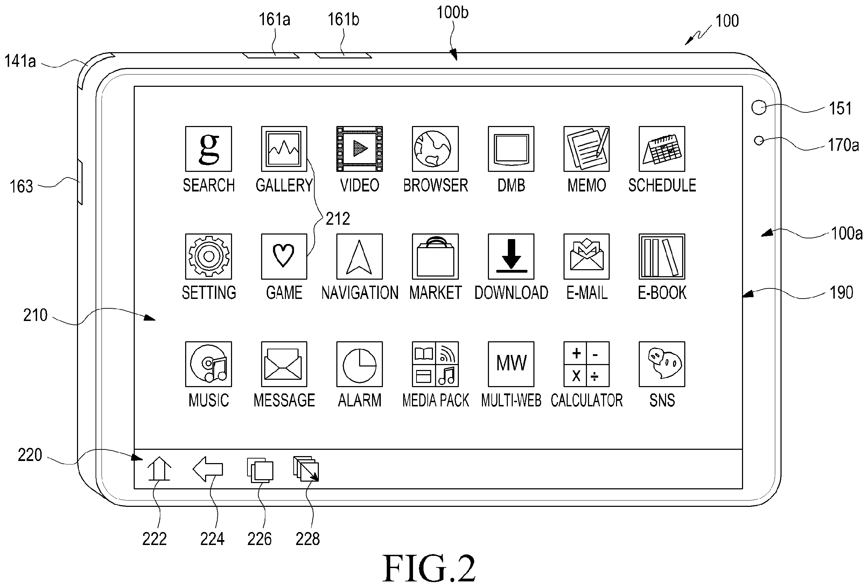

FIG. 2 is a perspective view of a mobile device according to an exemplary embodiment of the present invention.

Referring to FIG. 2, the touch screen 190 is disposed at the center of the front surface 100a of the mobile device 100. The touch screen 190 may be formed large enough to occupy almost the entire front surface 100a of the mobile device 100. The first camera 151 and the illumination sensor 170a may be disposed at an edge of the front surface 100a of the mobile device 100. For example, a power/reset button 161a, a volume button 161b, the speaker 163, a terrestrial Digital Multimedia Broadcasting (DMB) antenna 141a for receiving a broadcast signal, the microphone 162, the connector 165, and the like may be disposed on a side surface 100b of the mobile device 100, and the second camera 152 may be disposed on the rear surface (not shown) of the mobile device 100.

The touch screen 190 includes a main screen 210 and a bottom bar 220. In FIG. 2, each of the mobile device 100 and the touch screen 190 may have a horizontal length larger than a vertical length. In this case, the touch screen 190 is horizontally arranged.

The main screen 210 is an area where one or more applications are executed. FIG. 2 illustrates an example of displaying a home screen on the touch screen. 190. The home screen is the first screen to be displayed on the touch screen 190 when the mobile device 100 is powered on. Execution keys 212 for executing a plurality of applications stored in the mobile device 100 are arranged in rows and columns on the home screen. The execution keys 212 may take the form of icons, buttons, text or the like. When each execution key 212 is touched, an application corresponding to the touched execution key 212 is executed and then displayed on the main screen 210.

The bottom bar 220 is elongated along a horizontal direction at the bottom of the touch screen 190 and includes standard function buttons 222 to 228. A home screen button 222 displays the home screen on the main screen. 210. For example, when the home screen key 222 is touched on the main screen 210 during execution of applications, the home screen is displayed on the main screen 210 as illustrated in FIG. 2. A back button 224 displays the screen executed just before a currently executed screen or terminates the latest used application. A multi-view mode button 226 displays a plurality of applications on the main screen 210 in multi-view mode according to the present invention. A mode switching button 228 switches the display mode of a plurality of currently executed applications to another mode on the main screen 210. A multi-view mode button 226 may be displayed on the bottom bar 220 or on a configuration menu window or on a multi window launcher. For example, when the mode switching button 228 is touched, the display mode switches between overlap mode and split mode. In the overlap mode, a plurality of applications are displayed partially overlapped. In the split mode, the plurality of applications are displayed separately in different areas of the main screen 220.

A top bar (not shown) may be displayed at the top of the touch screen 190 to display states of the mobile device 100 such as the charged state of the battery, the intensity of a received signal, and the current time.

The bottom bar 220 and the top bar (not shown) may be omitted on the touch screen 190 according to an Operating System (OS) of the mobile device 100 or an application executed in the mobile device 100. When both the bottom bar 220 and the top bar are not displayed on the touch screen 190, the main screen 210 may occupy the entire area of the touch screen 190. Further, the bottom bar 220 and the top bar may be displayed as semi-transparently overlaid on the main screen 210.

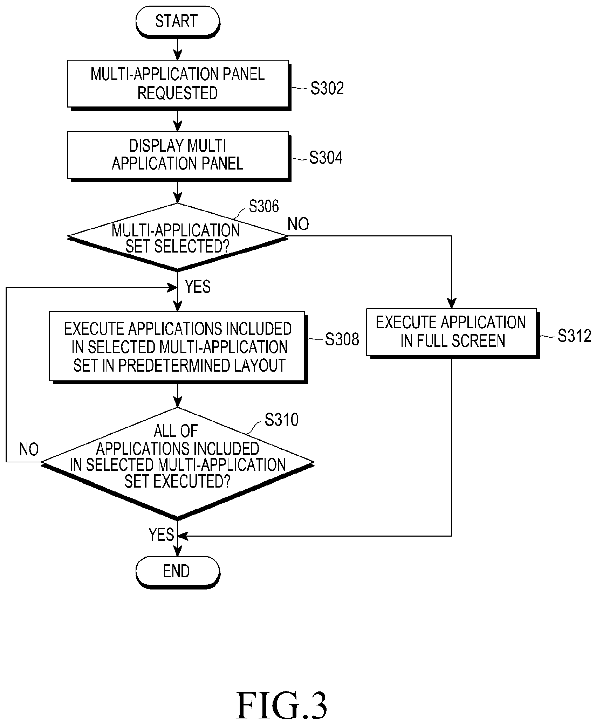

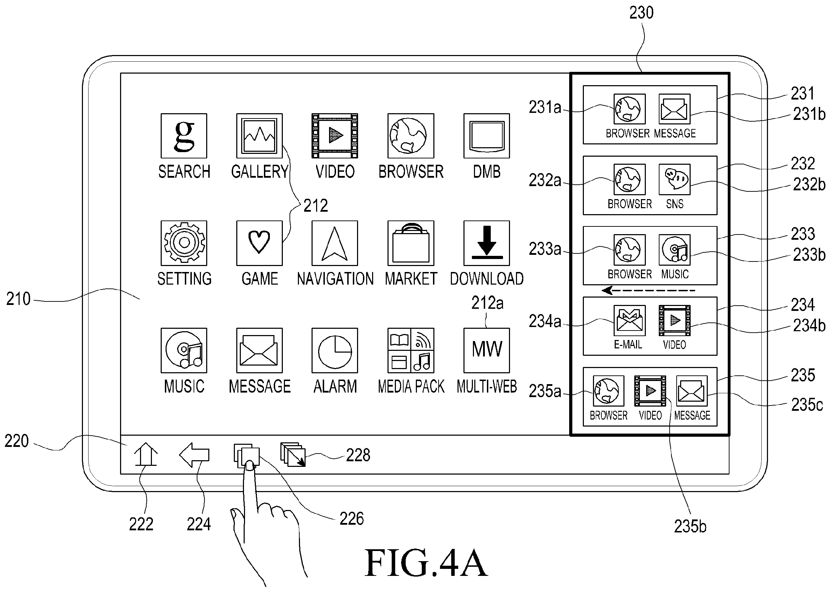

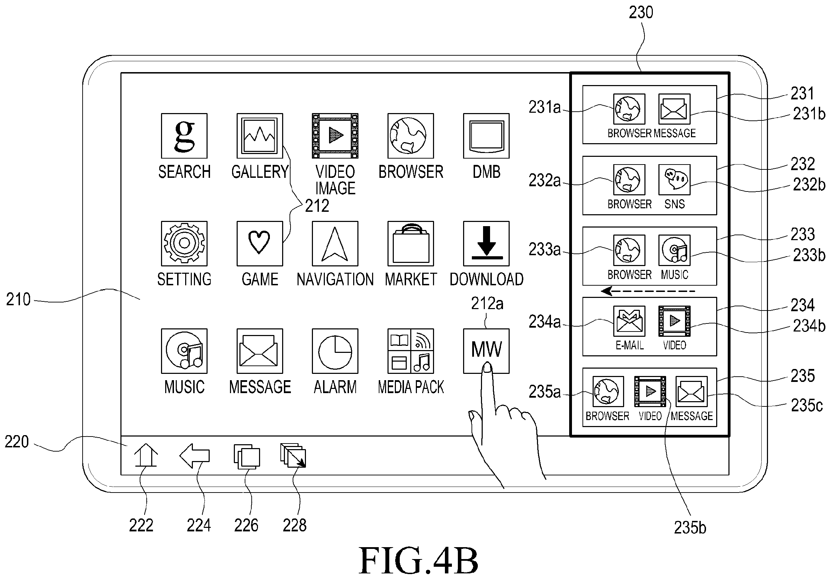

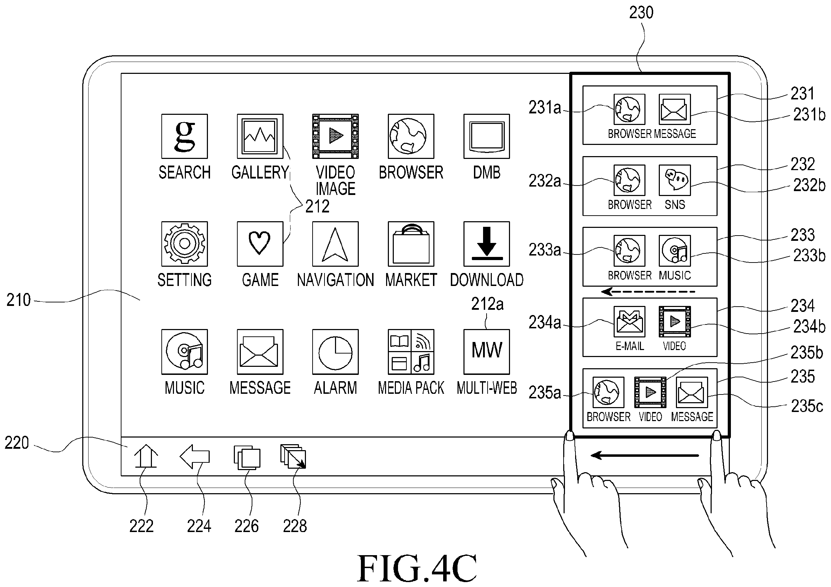

FIG. 3 is a flowchart illustrating a method of executing multiple applications according to an exemplary aspect of the present disclosure, and FIGs. 4A-4C illustrate a multi-application panel according to an exemplary aspect of the present disclosure. Referring to FIG. 3, a user requests a multi-application panel by touching a predetermined position on the touch screen 190 in step S302. The controller 110 may identify the touch corresponding to the request for the multi-application panel using the touch screen 190 and the touch screen controller 195. Upon receipt of the request for the multi-application panel, the controller 110 displays the multi-application panel on the touch screen 190 in step S304. Referring to FIGs. 4A-4C, when the user touches the multi-view mode button 226 on the touch screen 190, the controller 110 may identify the touch and display a multi-application panel 230 vertically at a predetermined position of the main screen 210, for example, at a right part of the main screen 210. In the case where the plurality of execution keys 212 formed on the main screen 210 include an execution key 212a for displaying the multi-application panel 230 as illustrated in FIG. 4B, if the execution key 212a is touched, the multi-application panel 230 is displayed in the right part of the main screen 210. In addition, when a continuous movement of a touch is detected within a predetermined distance in a direction from a right edge to the center of the main screen 210 as illustrated in FIG. 4C, the multi-application panel 230 may be displayed, sliding from the right edge toward the center of the main screen 210 according to the movement of the touch. A continuous movement of a touch refers to an action that maintains the touch on the touch screen 190. For example, the continuous movement of a touch may be a swipe gesture made by moving a finger's touch on the touch screen 190 to a predetermined distance horizontally or vertically. While the multi-application panel 230 is shown in FIGs. 4A, 4B and 4C as displayed at the right part of the main screen 210, its displayed position may be changed.

The multi-application panel 230 includes a plurality of multi-application sets 231, 232, 233, 234, and 235. Each of the multi-application sets 231, 232, 233, 234, and 235 includes a predetermined main application and at least one sub-application. Here, the at least one sub-application is not associated with the main application. The main application and the sub-application may be executed independently and may provide original function. The main application and the sub-application do not have priority to each other. The main application and the sub-application, which are applications initially provided by a manufacturer of the mobile device 100, may be set to one of a Web browser application for accessing the Internet to search for information, a message application for transmitting an SMS or MMS message, a Social Networking Service (SNS) application, a music application for playing music, an e-mail application for transmitting/receiving an e-mail, and a video application for playing a video. The setting may be changed later by the user. The SNS application is a service program for building personal relationships online, which may integrally manage an e-mail as well as a text message stored in the mobile device 100 and may enable the user to communicate with another person or to share and search for information. SNS applications may include, for example, Kakao Talk, Twitter, Facebook, Myspace, me2day, and the like.

Initial applications (i.e. Web browser, message, SNS, music, e-mail, and video applications) may be predetermined for the multi-application sets 231, 232, 233, 234, and 235, as follows.

According to the results of research on mobile users' favorite applications conducted by various research organizations, applications such as Web browser, video, SNS, e-mail, messaging, music, e-book, gaming, and call are most frequently used.

Based on the research results, the user's favorite application sets 231 to 235 include Web browser, video, SNS, e-mail, and music applications as basic applications according to the present invention.

Accordingly, each of the multi-application sets 231, 232, 233, 234, and 235 may include a combination of a first application and a second as illustrated in Table 1 below.

**Table 1**

| Multi-application sets | first application | second application | |
|---|---|---|---|
| 2-layer structure | Web browser | Video | |
| | Web browser | SNS | |
| | Web browser | music | |
| | Web browser | message | |
| | Video | SNS | |
| | Video | e-mail | |
| | Video | message | |
| | SNS | e-mail | |
| | SNS | e-book | |
| | e-mail | message | |
| 3-layer structure | Web browser | video | message |
| | Web browser | music | e-mail |
| | Web browser | e-mail | SNS |
| | Web browser | music | SNS |
| | video | e-mail | SNS |

For example, the first multi-application set 231 may include a Web browser application 231a and a message application 231b. The second multi-application set 232 may include a Web browser application 232a and an SNS application 232b. The third multi-application set 233 may include a Web browser application 233a and a music application 233b. The fourth multi-application set 234 may include an e-mail application 234a and a video application 234b. The fifth multi-application set 235 may include a Web browser application 235a, a video application 235b, and a message application 235c.

However, a game application and a call application are excluded from the basic applications initially provided to the multi-application sets 231, 232, 233, 234, and 235. Game applications are diverse in type and user preference. Similarly, the call application is less frequently used together with other applications at the same time. However, the user may change the applications included in the multi-application sets 231, 232, 233, 234, and 235 according to the user's preference to include, for example, games and call applications.

The applications included in the multi-application sets 231, 232, 233, 234, and 235 are programs independently implemented by the manufacturer of the mobile device 100 or application developers. Accordingly, execution of one application does not require preliminary execution of another application. In addition, even though one application is terminated, another application may be continuously executed.

According to exemplary aspects of the present disclosure, the user may freely configure the multi-application sets 231, 232, 233, 234, and 235 as he or she prefers by use of applications already installed in the mobile device 100 when the user purchases the device 100 or applications downloaded from an Internet application sale site after the mobile device 100 is purchased. Advantageously, there is no limit on the types of multi-application sets 231, 232, 233, 234, and 235.

As described above, the applications included in the multi-application sets 231, 232, 233, 234, and 235 are distinguished from a composite function application configured by adding some functions (a note function and a message transmission/reception function) provided by other applications to one application (for example, a video application), in that the applications included in the multi-application sets 231, 232, 233, 234, and 235 are programs implemented independently of one another. However, the composite function application is a newly developed single application having a plurality of functions, different from general applications. Accordingly, the composite function application provides only limited functions, instead of various functions as provided in the general applications. Moreover, the user has a burden to additionally purchase the new composite function application.

In step S306 of FIG. 3, the controller 110 determines whether one of the plurality of application sets 231, 232, 233, 234, and 235 displayed on the multi-application panel 230 has been touched. The user may select a plurality of desired applications by touching one of the plurality of displayed multi-application sets 231, 232, 233, 234, and 235.

If it is determined that one of the plurality of displayed application sets 231, 232, 233, 234, and 235 has been selected in step S306, the controller 110 simultaneously executes a plurality of applications included in the selected multi-application set and displays the plurality of applications on the touch screen 190 in a predetermined layout in step S308. Step S308 is repeated until all of the applications included in the selected multi-application set are executed in step S310.

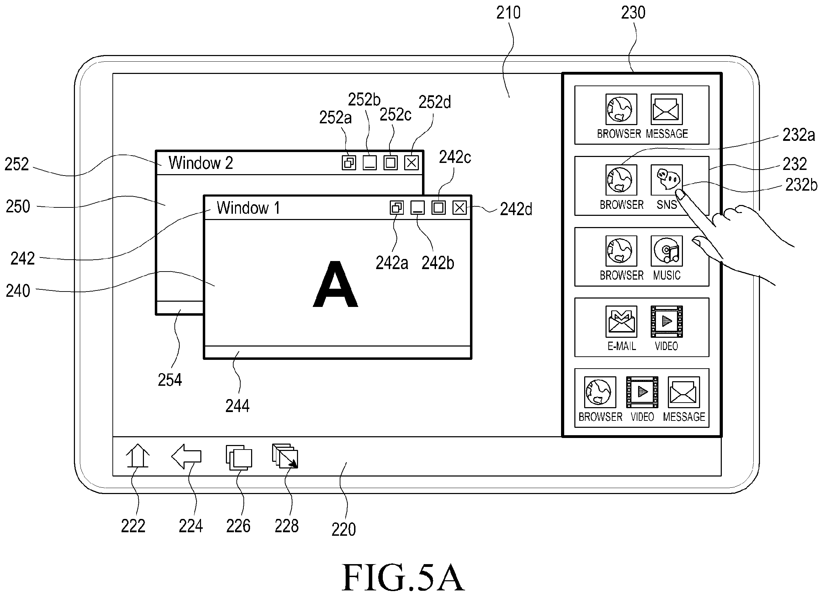

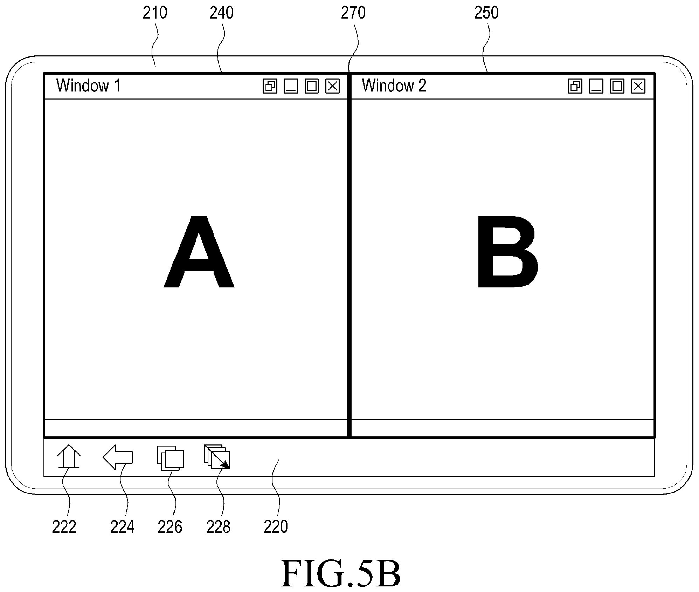

FIGs. 5A and 5B illustrate layouts of a plurality of applications according to an exemplary aspect of the present disclosure. Referring to FIG. 5A, for example, when the user touches the second multi-application set 232 on the multi-application panel 230, the controller 110 simultaneously executes the plurality of applications 232a and 232b included in the second multi-application set 232 and displays the applications 232a and 232b on the main screen 210 in a predetermined layout. Simultaneous execution of a plurality of applications may include executing all of the plurality of applications in the mobile device 100 by a single gesture of touching the displayed area of the second multi-application set 232. The simultaneous execution of a plurality of applications is different from execution and display of only one application by a user's single gesture in a mobile device according to related art. The simultaneous execution of a plurality of applications is also different from repetition of as many similar operations as the number of applications which the user desires to execute, as observed in the case where when for example, two applications are to be executed in a desktop computer, a first application is executed by selecting an execution key and then a second application is executed by selecting the execution key.

According to the present invention, a plurality of applications can be executed fast on a small screen of the mobile device 100 by a minimum gesture of the user.

FIG. 5A illustrates an example of displaying the two application 232a and 232b in overlap mode on the main screen 210. The first application 232a is executed and displayed in a first window 240, and the second application 232b is executed and displayed in a second window 250. The second window 250 lies under the first window 240 in the overlap mode. For example, as illustrated in FIG. 5A, the second window 250 may be displayed under the first window 240 at an upper left end of the first window 240. The first application 232a is a main application, and the second application 232b is a sub-application associated with the first application 232a.

The first window 240 is shaped substantially into a rectangle having top, bottom, left, and right sides, and the first application 232a is executed within the first window 240. A title bar 242 may be formed at the top of the first window 240 and a task bar 244 may be formed at the bottom of the first window 240. A title of the first application 232a (for example, Web browser) executed in the first window 240 is displayed in the title bar 242. A default button 242a for a default size, a minimize button 242b, a maximize button 242c, and an exit button 242d are sequentially formed in the title bar 242 to adjust the size of the first window 240 and quit the first window 240. The task bar 244 may display an execution state of the first application 232a. However, the title bar 242 and the task bar 244 need not be displayed.

The second window 250 is shaped substantially into a rectangle having top, bottom, left, and right sides, and the second application 232b is executed within the first window 240. A title bar 252 may be formed at the top of the second window 250 and a task bar 254 may be formed at the bottom of the second window 250. A title of the second application 232b (for example, message) executed in the second window 250 is displayed in the title bar 252. A default button 252a for a default size, a minimize button 252b, a maximize button 252c, and an exit button 252d are sequentially formed in the title bar 252 to adjust the size of the second window 250 and quit the second window 250. The task bar 254 may display an execution state of the second application 232b. However, the title bar 252 and the task bar 254 need not be displayed.

A plurality of objects related to the respective applications 232a and 232b are displayed in the respective windows 240 and 250. The objects may be formed in various types such as text, a figure, an icon, a button, a check box, a picture, a video, a Web, a map, etc. When the user touches an object, a predetermined function or event corresponding to the object may be performed in an application related to the object. The object may be called a view according to an OS.

FIG. 5B illustrates an example of displaying the two applications 232a and 232b on the main screen 210 in the split mode. When the user touches the second multi-application set 232 in the multi-application panel 230, the controller 110 simultaneously executes the plurality of applications 232a and 232b included in the second multi-application set 232 and displays the applications on the main screen 210 in the split mode.

In the split mode, the first and second windows 240 and 250 may be displayed without being overlapped on the main screen 210. For example, as illustrated in FIG. 5B, with the main screen 210 divided in half, the first window 240 may be displayed on the left half side of the main screen 210, whereas the second window 250 may be displayed on the right half side of the main screen 210. The first and second windows 240 and 250 are arranged adjacent to each other, sharing a common boundary line 270 but do not overlap. The common boundary line 270 is interposed between the first window 240 and the second window 250.

When the mode switching button 228 is touched while the two windows 240 and 250 are arranged in the overlap mode as illustrated in FIG. 5A, the controller 110 identifies the touch and switches the two windows 240 and 250 to the split mode as illustrated in FIG. 5B. In contrast, when the mode switching button 228 is touched while the two windows 240 and 250 are arranged in the split mode as illustrated in FIG. 5B, the controller 110 identifies the touch and switches the two windows 240 and 250 to the overlap mode as illustrated in FIG. 5A.

Referring to FIG. 3, if it is determined that a predetermined time (for example, 2 to 3 seconds) has elapsed without selecting any of the user's favorite application sets 231, 232, 233, 234, and 235 in step S306, the controller 110 determines not to perform simultaneous execution of a plurality of applications and a multi-view function in step S312. In this case, the controller 110 displays the window of the latest application executed in the mobile device 100 on the entirety of the main screen 210. Accordingly, only the single window is displayed on the main screen 210.

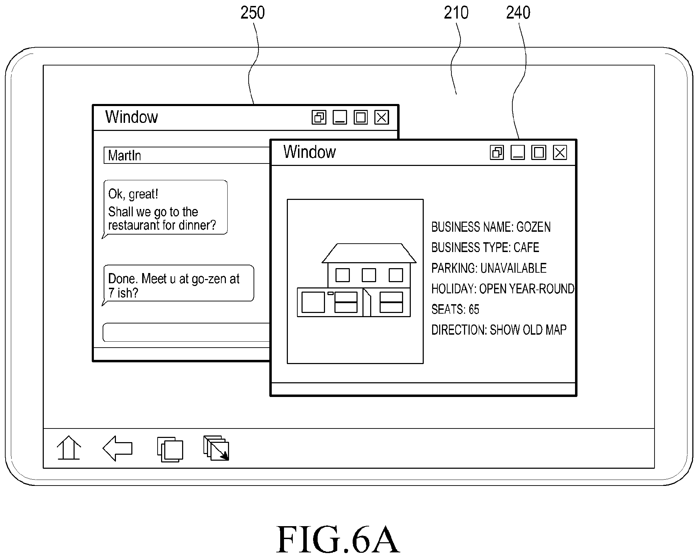

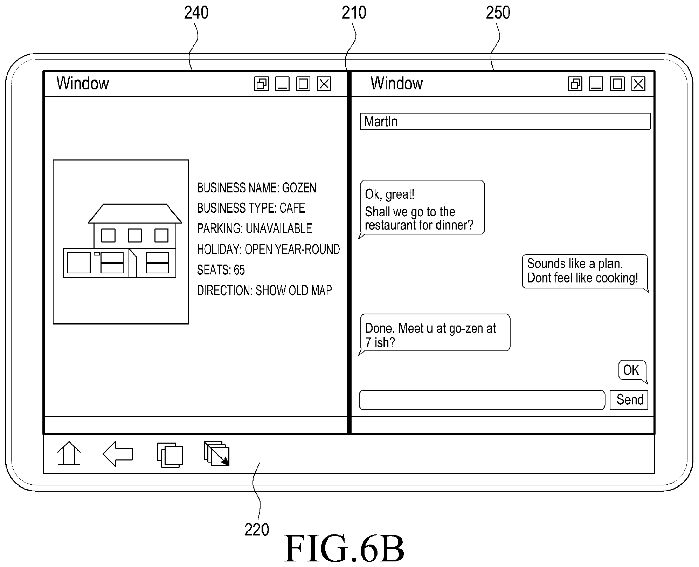

FIGs 6A and 6B illustrate screens on which a plurality of applications are executed according to an exemplary aspect of the present disclosure.

Referring to FIG. 6A, an example of executing a plurality of applications on the main screen 210 in the overlap mode is illustrated. The Web browser application is executed in the first window 240 and the message application is executed in the second window 250. FIG. 6B illustrates an example of displaying the first window 240 and the second window 250 on the main screen 210 in the split mode.

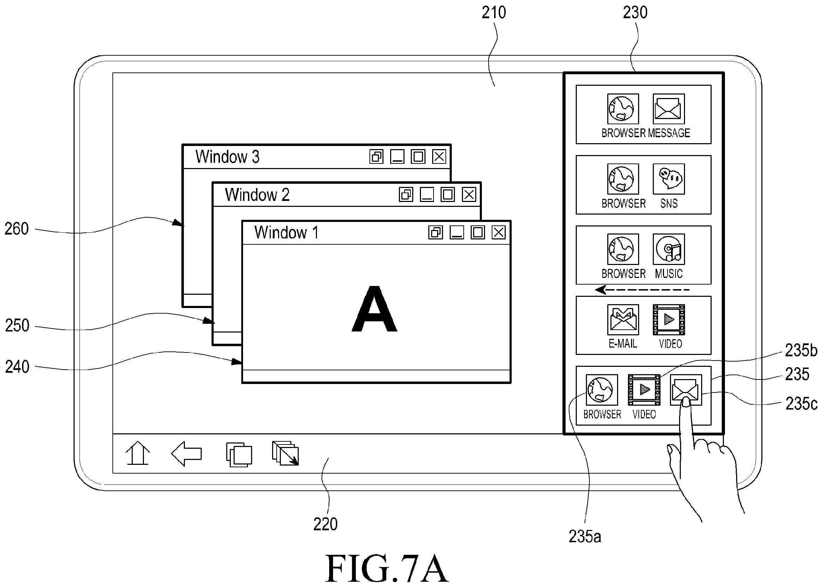

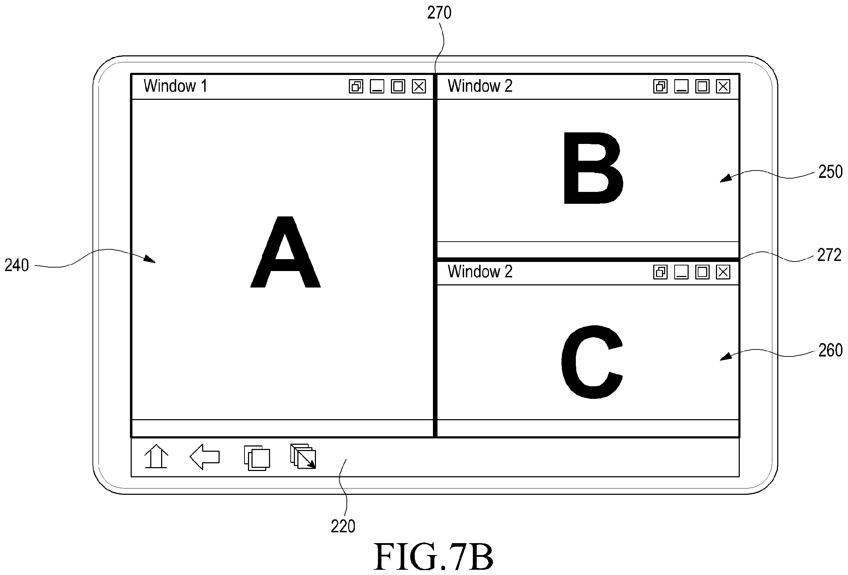

The user may search for a desired restaurant through the Web browser application executed in the first window 240 on the one touch screen 190, while making an appointment with a friend to have dinner in the desired restaurant through the message application executed in the second window 250 at the same time. As illustrated in FIGs. 6A and 6B, the user may search information in the Internet by touching objects on the first window 240. The user may talk to a friend, Martin, through the message service by touching objects on the second window 250. FIGs. 7A and 7B illustrate layouts for displaying a plurality of applications according to another exemplary aspect of the present disclosure.

Referring to FIG. 7A, when the user touches the fifth multi-application set 235 in the multi-application panel 230, the controller 110 simultaneously executes a plurality of applications 235a, 235b, and 235c included in the fifth multi-application set 235 and displays the applications 235a, 235b, and 235c on the main screen 210 in a predetermined layout.

FIG. 7A illustrates an example of displaying the three applications 235a, 235b, and 235c on the main screen 210 in the overlap mode. The first application 235a is displayed in the first window 240, the second application 235b is displayed in the second window 250, and the third application 235c is displayed in a third window 260. In the overlap mode, the second window 250 lies under the first window 240. For example, as illustrated in FIG. 7A, the second window 250 may be displayed under the first window 240 at an upper left end of the first window 240. The third window 260 may be displayed under the second window 250 at an upper left end of the second window 250.

The first application 235a is a main application, and the second and applications 235b and 235c are sub-applications associated with the first application 235a. The first, second and third applications 235a, 235b and 235c are programs independently implemented by manufacturers or application developers. A plurality of objects are displayed in respective windows 240, 250, and 260 to perform functions and events corresponding to the respective applications 235a, 235b, and 235c.

FIG. 7B illustrates an example of displaying the three applications 235a, 235b, and 235c on the main screen 210 in the split mode. When the user touches the fifth multi-application set 235 in the multi-application panel 230, the controller 110 simultaneously executes the plurality of applications 235a, 235b, and 235c included in the fifth multi-application set 235 and displays the applications 235a, 235b, and 235c on the main screen 210 in the split mode.

In the split mode, the first window 240, the second window 250, and third window 260 may be displayed without being overlapped on the main screen 210. For example, as illustrated in FIG. 7B, with the main screen 210 divided into three areas, the first window 240 is displayed on the left half side of the main screen 210, the second window 250 is displayed at an upper right side of the main screen 210, and the third window 260 is displayed at a lower right side of the main screen 210. The first window 240 is arranged not to overlap with the second window 250 and the third window 260, while sharing the boundary line 270 with the second and third windows 250 and 260. The second window 250 and the third window 260 are arranged not to overlap each other, while sharing a common boundary line 272.

When the mode switching button 228 is touched while the three windows 240, 250, and 260 are arranged in the overlap mode as illustrated in FIG. 7A, the controller 110 may arrange the three windows 240, 250 and 260 in the split mode as illustrated in FIG. 7B. In contrast, when the mode switching button 228 is touched while the three windows 240, 250, and 260 are arranged in the split mode as illustrated in Fig. 7B, the controller 110 may switch the three windows 240, 250, and 260 to the overlap mode as illustrated in FIG. 7A.

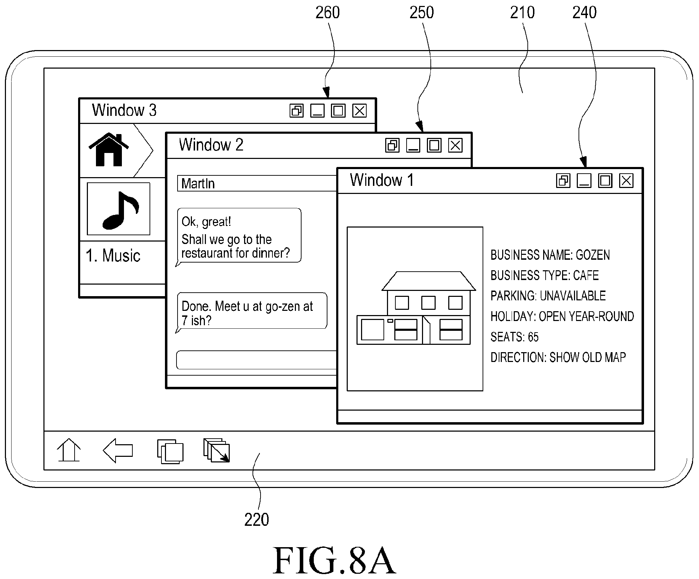

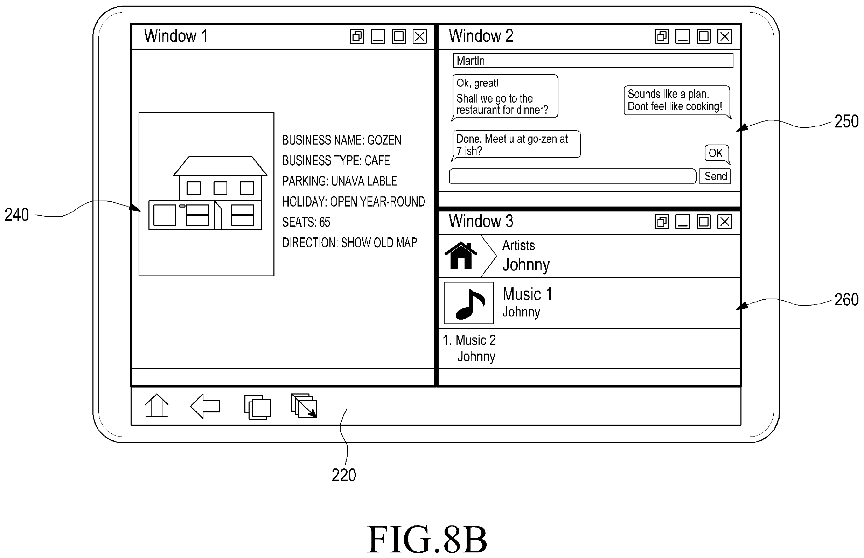

FIGs. 8A and 8B illustrate screens in which a plurality of applications are executed according to another aspect of the present disclosure.

Referring to FIG. 8A, an example of executing a plurality of applications on the main screen 210 in the overlap mode is illustrated. The Web browser application is executed in the first window 240, the message application is executed in the second window 250, and the music play application is executed in the third window 260. FIG. 8B illustrates an example of displaying the first window 240, the second window 250, and the third window 260 on the main screen 210 in the split mode.

The user may search for a desired restaurant through the Web browser application executed in the first window 240 on the touch screen 190 and make an appointment with a friend to have dinner in the desired restaurant through the message application executed in the second window 250 at the same time. Music may be played and the user may listen to the music through the music application executed in the third window 260. In FIGs. 8A and 8B, the user may search for information through the Internet by touching objects on the first window 240. The user may talk to a friend, Martin, through the message service by touching objects on the second window 250. In addition, the user may select and listen to the music by touching objects on the third window 260.

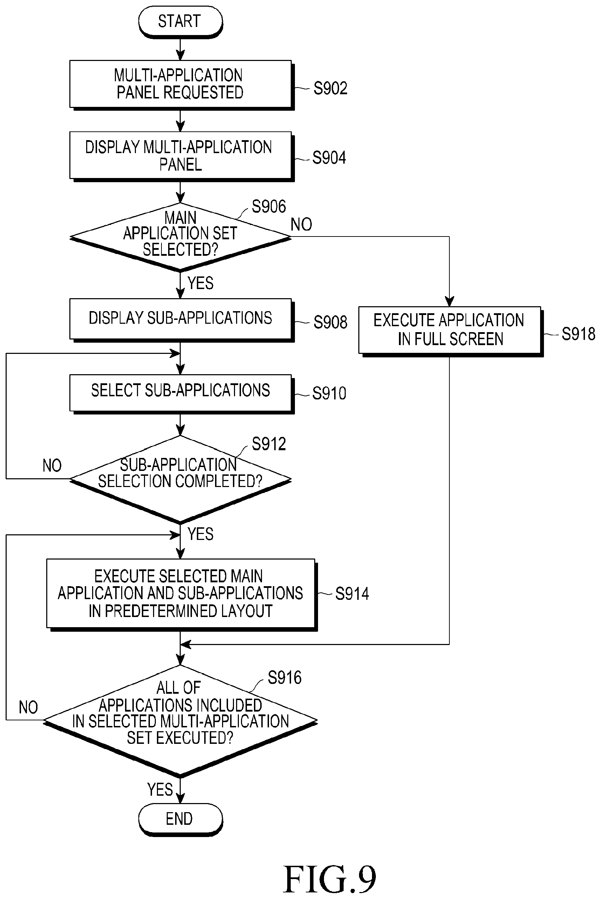

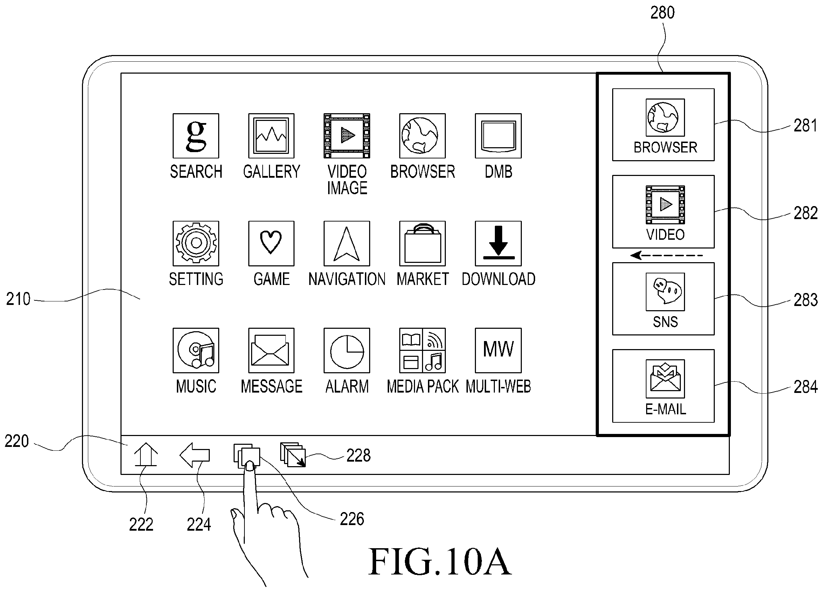

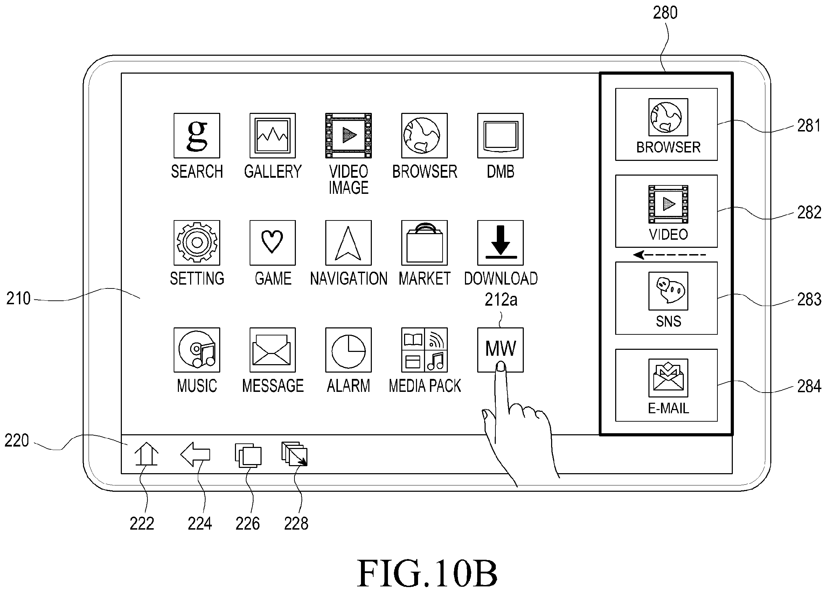

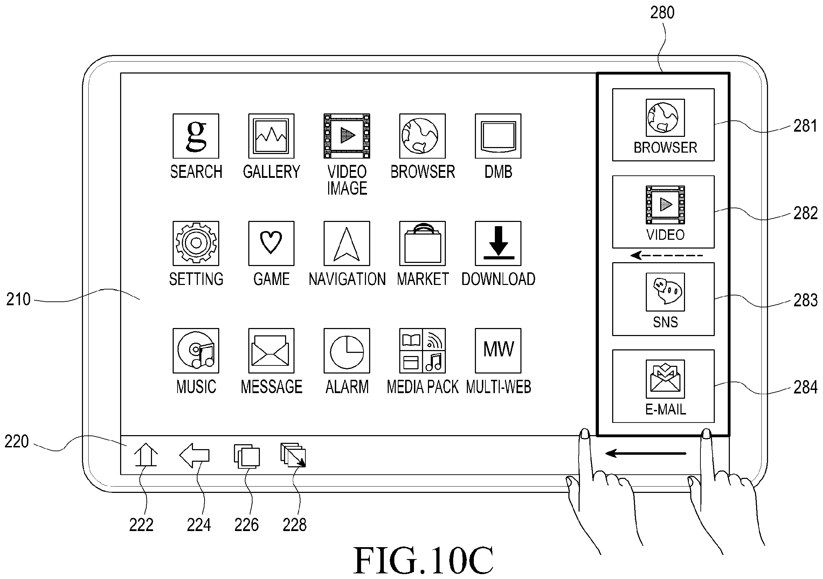

FIG. 9 is a flowchart illustrating a method for executing multiple applications according to an exemplary embodiment of the present invention, and FIGs. 10A, 10B and 10C illustrate multiple application panels according to another exemplary embodiment of the present invention.

Referring to FIG. 9, the user requests the multi-application panel by touching a predetermined position on the touch screen 190 in step S902. The controller 110 may identify the touch corresponding to the request for the multi-application panel through the touch screen 190 and the touch screen controller 195. Upon receipt of the request for the multi-application panel, the controller 110 displays the multi-application panel on the touch screen 190 in step S904.

Referring to FIG. 10A, when the user touches the multi-view mode button 226 on the touch screen 190, the controller 110 identifies the touch and displays the multi-application panel 280 vertically at a predetermined position of the main screen 210, for example, in a right part of the main screen 210. In the case where the execution key 212a for displaying the multi-application panel 280 is formed on the main screen 210 as illustrated in FIG. 10B, if the execution key 212a is touched, a multi-application panel 280 may be displayed in the right part of the main screen 210. When a continuous movement of one touch is detected within a predetermined distance in a direction from the right edge toward the center of the main screen 210 as illustrated in FIG. 10C, the multi-application panel 280 may be displayed, sliding in the direction from the right edge toward the center of the main screen 210 according to the continuous movement of the touch. The continuous movement of one touch may be a swipe gesture. While the multi-application panel 280 is displayed in the right part of the main screen 210 in FIGs. 10A, 10B and 10C, its displayed position may be changed.

The multi-application panel 280 includes a plurality of multi-application sets 281 to 284. Each of the multi-application sets 281 to 284 includes a main application. For example, the first multi-application set 281 includes the Web browser application as the main application. The second application set 282 includes the video application as the main application. The third application set 283 includes the SNS application as the main application. The fourth application set 284 includes the e-mail application as the main application. Only the main applications of the multi-application sets listed in Table 1 are displayed in the multi-application panel 280 in step S904.

Referring to FIG. 9, the controller 110 determines whether one of the plurality of multi-application sets 281 to 284 included in the multi-application panel 280 has been touched in step S906.

Upon selection of one of the plurality of multi-application sets 281 to 284 in step S906, the controller 110 displays sub-applications included in the selected multi-application set together with the main application of the selected multi-application set in step S908.

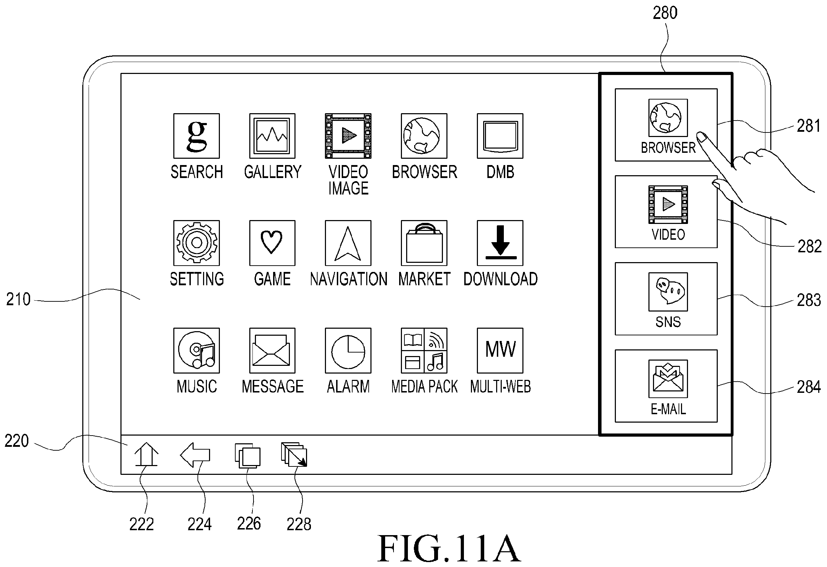

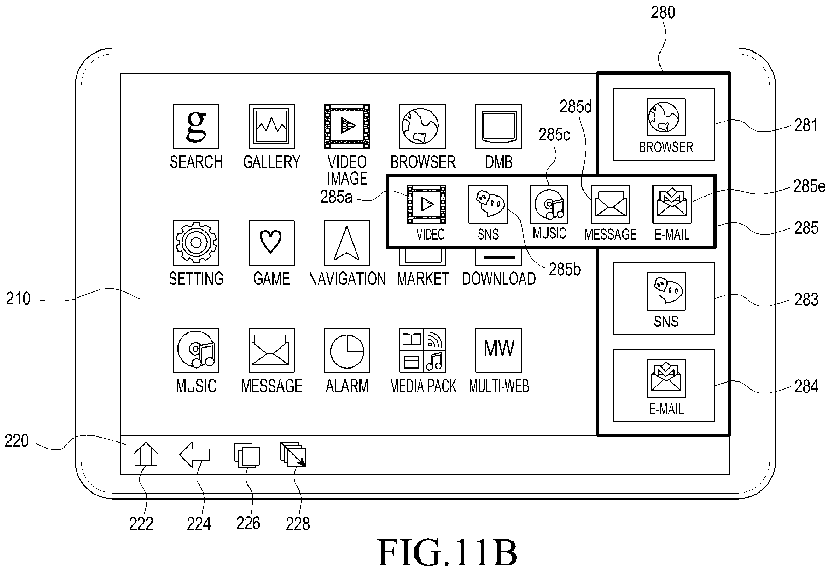

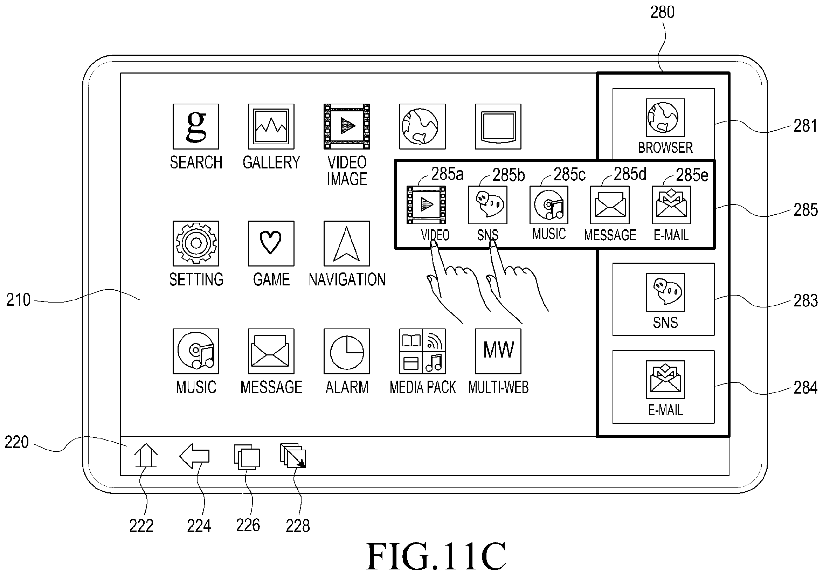

FIGs. 11A, 11B and 11C illustrate multiple application panels according to another exemplary embodiment of the present invention.

Referring to FIG. 11A, when the first main application 281 is touched from among the plurality of main applications 281 to 284 displayed in the multi-application panel 280, a sub-application panel 285 is displayed as illustrated in FIG. 11B. The sub-application panel 285 includes sub-applications 285a to 285e associated with the first main application 281. The sub-applications 285a to 285e are combined with the first main application 281 to configure the multi-application sets of Table 1. For example, if the main application is the web browser application 281, its sub-applications may be the video, SNS, music, message, and e-mail applications 285a to 285e, referring to Table 1.

Referring to FIG. 9, the user selects a sub-application or sub-application by touching the one or more sub-applications 285a to 285e in step S910. Accordingly, the controller 110 identifies the touch on the one or more applications 285a to 285e.

Referring to FIG. 11C, the user may touch only the video application 285a among the sub-applications 285a to 285e displayed in the sub-application panel 285 or may additionally touch the SNS application 285b.

Referring to FIG. 9, the controller 110 determines whether the sub-application selection has been completed in step S912. For example, when there is no touch input for a predetermined time (for example, 2 to 3 seconds) on the sub-application panel 285, the controller 110 determines that the sub-application selection has been completed.

The controller 110 simultaneously executes the main application selected in step S906 and the one or more sub-applications selected in step S910 and displays the applications on the main screen 210 in a predetermined layout in step S914. Step S914 is repeated until all the applications included in the selected multi-application set are executed in step S916.

When one main application and one sub-application are selected to form one multi-application set, the two applications included in the multi-application set may be displayed on the main screen 210 in the overlap mode or in the split mode, as illustrated in FIGs. 5A to 6B. When one main application and two sub-applications are selected to form one multi-application set, the three applications included in the multi-application set may be displayed on the main display screen 210 in the overlap mode or the split mode as illustrated in FIGs. 7A to 8B.

In addition, when one main application and three or more sub-applications are selected, the applications may be displayed in the overlap mode or in the split mode through proper screen division.

If a predetermined time (for example 2 to 3 seconds) has elapsed without selecting any of the main applications 285a to 285e, the controller 110 determines no to perform simultaneous execution of a plurality of applications or a multi-view function in step S918. In this case, the window of the latest application executed in the mobile device 100 is displayed on the entirety of the main screen 210. Accordingly, only the single window is displayed on the main screen 210.

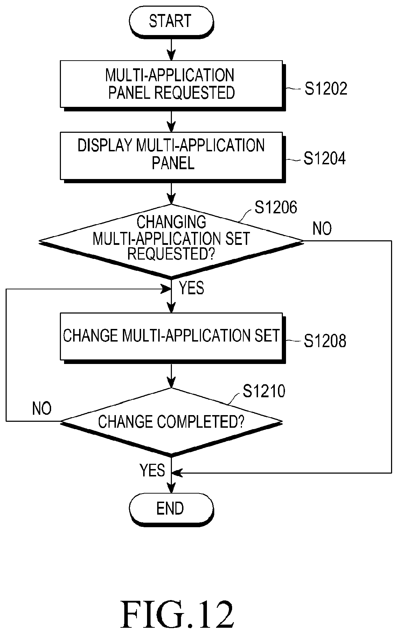

FIG. 12 illustrates a method for changing a multi-application set according to an exemplary aspect of the present disclosure. Referring to FIG. 12, with the multi-application panel 230 displayed on the main screen 210, the controller 110 identifies a user's gesture to change the multi-application sets 231 to 235 in the multi-application panel 230 in step S1202.

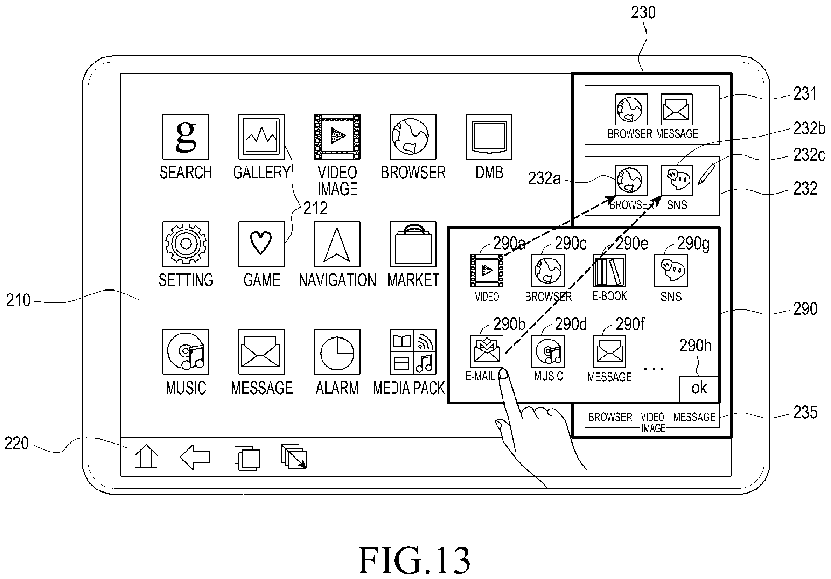

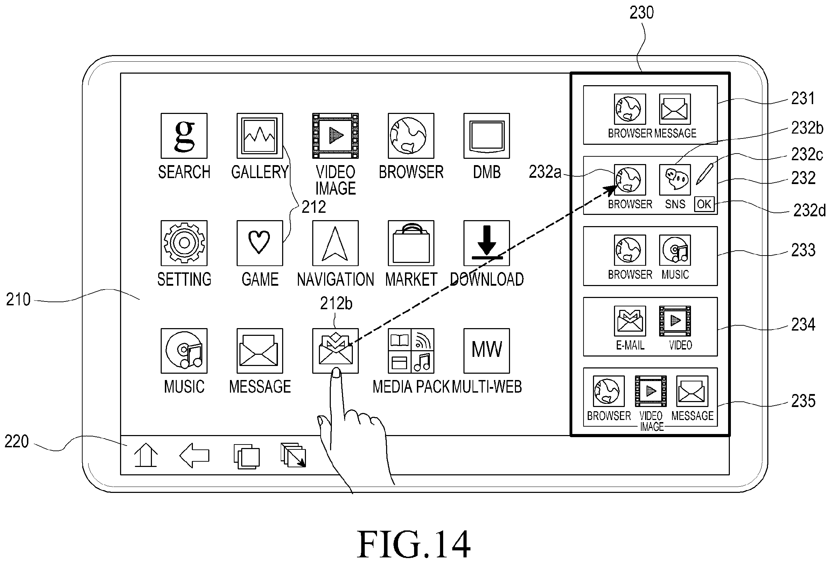

If the user touches one of the multi-application sets 231 to 235 is touched in the multi-application panel 230, the controller 110 determines that the user requests changing the multi-application sets 231 to 235 and displays an application edit panel 290 in step S1204. Steps 1206-1210 are described below with respect to FIGs. 13 and 14.

FIG. 13 illustrates a method for changing a multi-application set according to an exemplary aspect of the present disclosure.

Referring to FIG. 13, for example, when the user touches the second multi-application set 232 in the multi-application panel 230, the controller 110 determines that the user requests changing the second multi-application set 232 and displays the application edit panel 290. An edit key 232c for editing applications may be formed in the second multi-application set 232. Accordingly, when the edit key 232c is touched, the controller 110 may display the application edit panel 290. When the touch on the second multi-application set 232 is maintained, for example, for one or more seconds, the controller 110 determines that there is a request for changing the second multi-application set 232 and displays the application edit panel 290. On the other hand, if the touch on the second multi-application set 232 is maintained for less than one second, the controller 110 may determine that there is a request for simultaneously executing the plurality of applications 232a and 232b included in the second multi-application set 232.

The application edit panel 290 is displayed near to the second multi-application set 232 under the second multi-application set 232. The application edit panel 290 includes available replacement applications 290a to 290g for the applications 232a and 232b of the second multi-application set 232.

After one available replacement application is touched in the application edit panel 290, the controller 110 identifies a gesture of dragging the touch to the position of one of the applications 232a and 232b of the second multi-application set 232, and replaces the applications 232a and 232b of the second multi-application set 232 with the touched replacement application in the application edit panel 290.

For example, the user may replace the first application 232a with the first replacement application 290a by making a drag-and-drop gesture from the position of the first replacement application 290a in the application edit panel 290 to the position of the first application 232a in the second multi-application set 232. The first application 232a may be the Web browser application, and the first replacement application 290a may be the video application.

The user may replace the second application 232a with the second replacement application 290b by making a drag-and-drop gesture from the position of the second replacement application 290b in the application edit panel 290 to the position of the second application 232b in the second multi-application set 232. The second application 232b may be the SNS application, and the second replacement application 290b may be the e-mail application. As described above, although the second multi-application set 232 initially includes the Web browser application and the SNS application, it may be changed to include the video application and the e-mail application by the user.

An edit termination key 290h may be added to the application edit panel 290. Accordingly, when the edit termination key 290h is touched, the controller 110 removes the application edit panel 290 and sets the second multi-application set 232 as including the replacement applications 290a and 290b, determining that the second multi-application set 232 has been completely edited.

FIG. 14 illustrates a method for changing a multi-application set according to another exemplary aspect of the present disclosure.

Referring to FIG. 14, with the multi-application panel 230 displayed on the main screen 210, the controller identifies a user's gesture to change the multi-application sets 231 to 235 in the multi-application panel 230. When the user touches one of the multi-application sets 231 to 235 in the multi-application panel 230, the controller 110 determines that the user requests changing the touched multi-application set.

For example, when the second multi-application set 232 is touched in the multi-application panel 230, the controller 110 determines that there is a request for editing the second multi-application set 232. An edit key 232c may be provided in the second multi-application set 232. When the edit key 232c is touched or when a touch on a part of the displayed area of the second multi-application set 232 is maintained for a predetermined time or longer, the controller 110 determines that changing the second multi-application set 232 is requested. The controller 110 may indicate that the second multi-application set 232 is in a changeable state by highlighting the second multi-application set 232 or displaying the second multi-application set 232 in a different color from the multi-application sets 231, 233, 234 and 235.

After one execution key 212b is touched from among the execution keys 212 on the main screen 210, the controller 110 identifies a gesture of dragging the touch to the position of the first application 232a in the second multi-application set 232 and replaces the first application 232a in the second multi-application set 232 with an application corresponding to the execution key 212b.

For example, the first application 232a may be the Web browser application, and the application corresponding to the execution key 212b of the main screen 210 may be the e-mail application. As described above, although the second multi-application set 232 initially includes the Web browser application and the SNS application, it may be changed to include the e-mail application and the SNS application by the user.

An edit termination key 232d may be added to the second multi-application set 232. Accordingly, when the edit terminal key 232d is touched, the controller 110 sets the second multi-application set 232 as including the applications 212b and 232b, determining that the second multi-application set 232 has been completely edited.

While the methods for editing a multi-application panel 230 using an execution key in the application edit panel 290 or the main screen 210 according to an aspect of the present disclosure have been described with reference to FIGs. 13 and 14, it is easily understood by those skilled in the art that the multi-application panel 280 according to another aspect of the present disclosure may be edited using an execution key in the application edit panel 290 or the main screen 210.

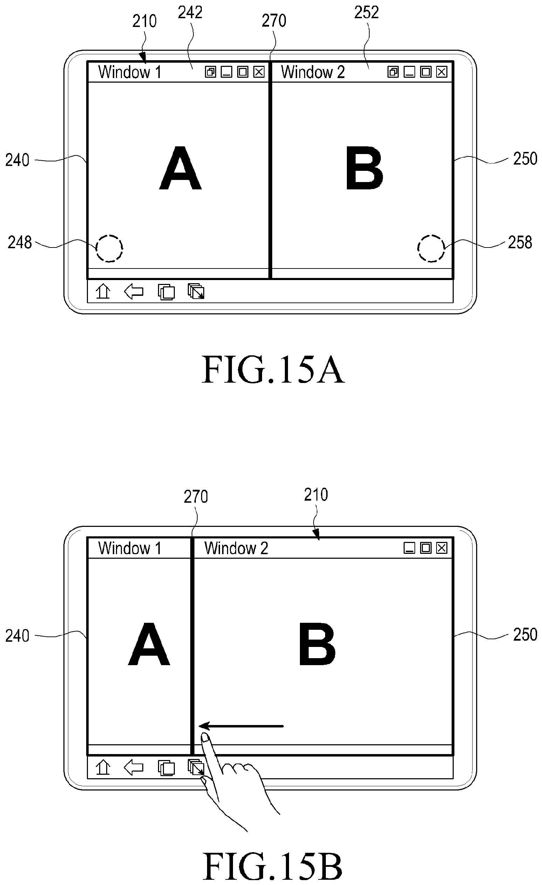

FIGs. 15A to 15D illustrate a method for controlling a screen in which multiple applications are executed in the mobile device according to an exemplary aspect of the present disclosure.

Referring to FIG. 15A, the two windows 240 and 250 are displayed on the main screen 210 of the mobile device 100 in the split mode. The first window 240 is located at the left side of the main screen 210, whereas the second window 250 is located at the right side of the main screen 210. A first application is executed and displayed in the first window 240, and a second application is executed and displayed in the second window 250. A plurality of objects A may be displayed in the first application and a plurality of objects B may be also displayed in the second application.

While the first and second applications may be simultaneously executed by means of the afore-described multi-application panels 230 and 280, exemplary aspects of the present disclosure are not limited thereto. Execution and display of one of the first and second applications (for example, the first application) on the main screen 210 may precede execution and display of the other application (for example, the second application) on the main screen 210. The first and second applications may also be sequentially executed and displayed on the main screen 210 in below-described methods for controlling the screen sizes, positions, and display directions of the first and second windows 240 and 250.

The first and second windows 240 and 250 share the common boundary line 270 and are connected to each other through the common boundary line 270. In FIG. 15A, the sizes of the first and second windows 240 and 250 are equal, and the common boundary line 270 is vertically drawn at the center of the main screen 210. The right edge of the first window 240 is extended to the common boundary line 270 and the left edge of the first window 240 is extended to the left edge of the main screen 210. The left edge of the second window 250 is extended to the common boundary line 270, and the right edge of the second window 250 is extended to the right edge of the main screen 210.

The first and second applications executed respectively in the first and second windows 240 and 250 are independent programs. Accordingly, for execution of the second application, it is not required that the first application should be executed in advance. The second application may be continuously executed on the main screen 210 even though the first application is terminated, and vice versa.

The controller 110 identifies a continuous movement of a touch from the common boundary line 270 and simultaneously changes the sizes of the first and second windows 240 and 250 according to the movement of the touch. The continuous movement of the touch may be a swipe gesture made by moving a finger's touch on the common boundary line 270 horizontally to a predetermined distance. When an object A included in the first application is touched in the first window 240 or when an object B included in the second application is touched in the second window 250, a function or event corresponding to the object A or the object B may be executed in the first application or the second application. Therefore, in order to simultaneously change the sizes of the first and second windows 240 and 250, an area which does not affect the object A and the object B, for example, the common boundary line 270 may be used.

Referring to FIG. 15B, when the user touches the common boundary line 270 and moves the touch to the left, the common boundary line 270 and the left side of the second window 250 move together for the moved distance of the touch. Accordingly, the horizontal length of the second window 250 is increased by the moved distance of the touch. The common boundary line 270 and the right side of the first window 240 move together for the moved distance of the touch. As a result, the horizontal length of the first window 240 is decreased by the moved distance of the touch. As described above, as the first window 240 gest smaller, the object A displayed in the first application of the first window 240 may be displayed only partially.

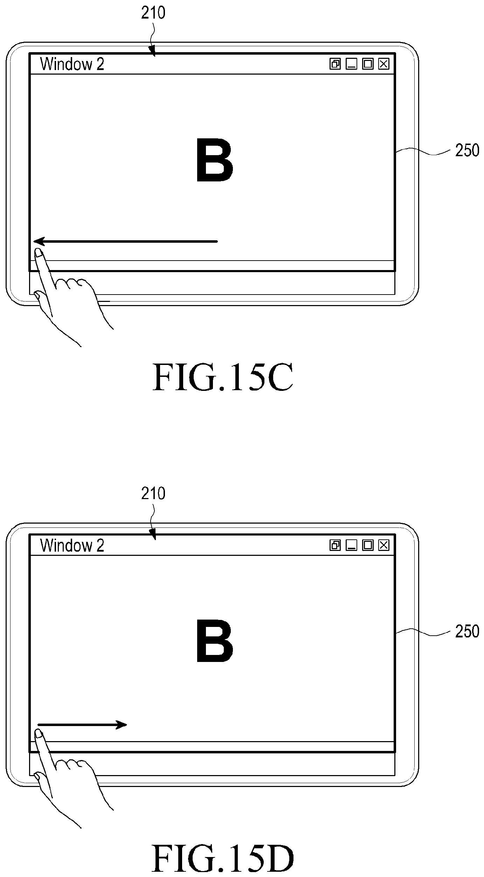

Referring to FIG. 15C, when the user touches the common boundary line 270 and moves the touch to the left edge of the main screen 210 in the left direction, the common boundary line 270 and the left side of the second window 250 move together for the moved distance of the touch. Thus, the left side of the second window 250 is extended to the left end of the touch screen 190 for the moved distance of the touch. Consequently, even though both the first and second applications are executed in the mobile device 100, only the second window 250 is displayed on the main screen 210 of the touch screen 190, without the first window 240. Nonetheless, it is possible to display the first window 240 on the touch screen 190 as illustrated in FIG. 15D.

Referring to FIG. 15D, when the user touches the left edge of the main screen 210 and moves the touch to the right, that is, toward the center of the main screen 210, the common boundary line 270 and the left side of the second window 250 move together for the moved distance of the touch. If the touch reaches the center of the touch screen 190, the first window 240 and the second window 250 may be displayed together on the main screen 210 as illustrated in FIG. 15A.

While it has been described referring to FIGs. 15A to 15D that the sizes of the first and second windows 240 and 250 are simultaneously changed by touching the common boundary line 270 by the user, the sizes of the first and second windows 240 and 250 may be simultaneously changed by touching particular positions of the first and second windows 240 and 250. For example, the user may simultaneously change the sizes of the first and second windows 240 and 250 by swiping the title bars 242 and 252 in the first and second windows 240 and 250. Further, window size control keys 248 and 258 may be formed in the first and second windows 240 and 250, and the user may simultaneously change the sizes of the first and second windows 240 and 250 by swiping the window size control keys 248 and 258. Since the method for simultaneously changing the sizes of the first and second windows 240 and 250 using the title bars 242 and 252 or the window size control keys 248 and 258 are performed substantially in the same manner as the method for simultaneously changing the sizes of the first and second windows 240 and 250 using the common boundary line 270, a description thereof will not be provided to avoid redundancy. In addition, while it has been described in FIGs. 15A to 15D that the sizes of the first and second windows 240 and 250 are simultaneously changed, the operation differs from changing the sizes of various objects formed in one application, for example, the sizes or positions of various objects included in the second application of the second window 250.

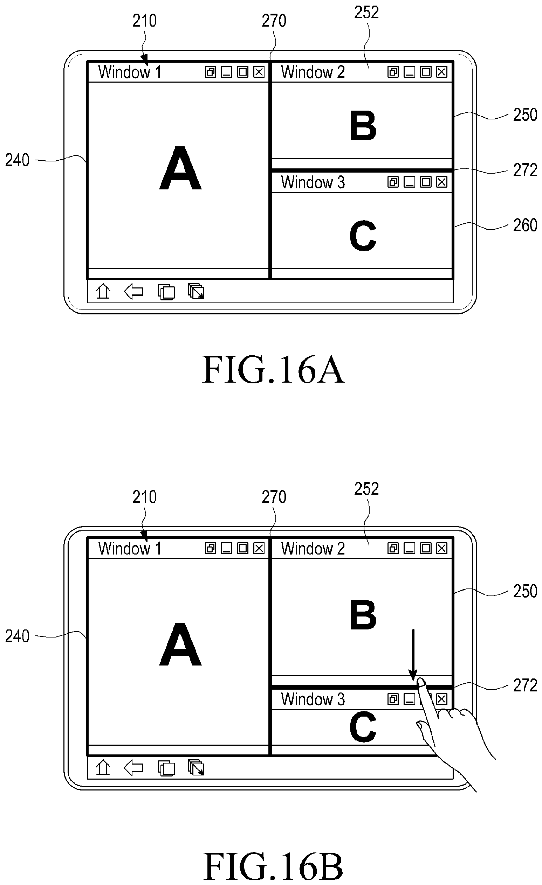

FIGs. 16A to 16D illustrate a method for controlling a screen in which multiple applications are executed in a mobile device according to another exemplary aspect of the present disclosure.

Referring to FIG. 16A, the three windows 240, 250, and 260 are displayed on the main screen 210 of the device 100 in the split mode. The first window 240 is located at the left side of the main screen 210, the second window 250 is located at the upper right side of the main screen 210, and the third window 260 is located at the lower right side of the main screen 210. A first application is executed and displayed in the first window 240, a second application is executed and displayed in the second window 250, and a third application is executed and displayed in the third window 260. The first, second, and third applications are different applications which are independent programs. A plurality of objects A may be displayed in the first application. A plurality of objects B may be displayed in the second application. A plurality of objects C may be displayed in the third application. The first, second, and third applications may be simultaneously executed using the afore-described multi-application panels 230 and 280, which should not be construed as limiting exemplary embodiments of the present invention. Thus the first, second, and third applications may be sequentially executed and displayed on the main screen 210.

The first, second and thirds windows 240, 250 and 260 share the common boundary line 270 and are connected to one another through the common boundary line 270. The second and third windows 250 and 260 share the common boundary line 272, connected to each other through the common boundary line 272.

In FIG. 16A, the size of the first window 240 equals to the sum of the sizes of the second and third windows 250 and 260 and the common boundary line 270 is drawn vertically at the center of the main screen 210.

The second and third windows 250 and 260 are shown in FIG. 16A as having the same size and the common boundary line 272 is drawn horizontally. The first window 240 has a right edge extended to the common boundary line 270 and a left edge extended to the left edge of the main screen 210. The second window 250 has a left edge extended to the common boundary line 270, a right edge extended to the right edge of the main screen 210, a top edge extended to the top edge of the main screen 210, and a bottom edge extended to the common boundary line 272. The third window 260 has a left edge extended to the common boundary line 270, a right edge extended to the right edge of the main screen 210, a top edge extended to the common boundary line 272, and a bottom edge extended to the bottom edge of the main screen 210.

The controller 110 identifies a continuous movement of a touch from the common boundary line 272 and simultaneously changes the sizes of the second and third windows 250 and 260 according to the continuous movement of the touch. The continuous movement of the touch may be a swipe gesture made by moving a finger's touch on the common boundary line 272 vertically to a predetermined distance.

Referring to FIG. 16B, when the user touches the common boundary line 272 and moves the touch downward, the common boundary line 272 and the bottom side of the second window 250 move together for the moved distance of the touch. As a result, the vertical length of the second window 250 is increased by the moved distance of the touch. The common boundary line 272 and the top side of the third window 260 also move together for the moved distance of the touch. Hence, the vertical length of the third window 260 is decreased by the moved distance of the touch. As described above, as the third window 260 gest smaller, the object C displayed in the third application of the third window 260 may be displayed only partially.

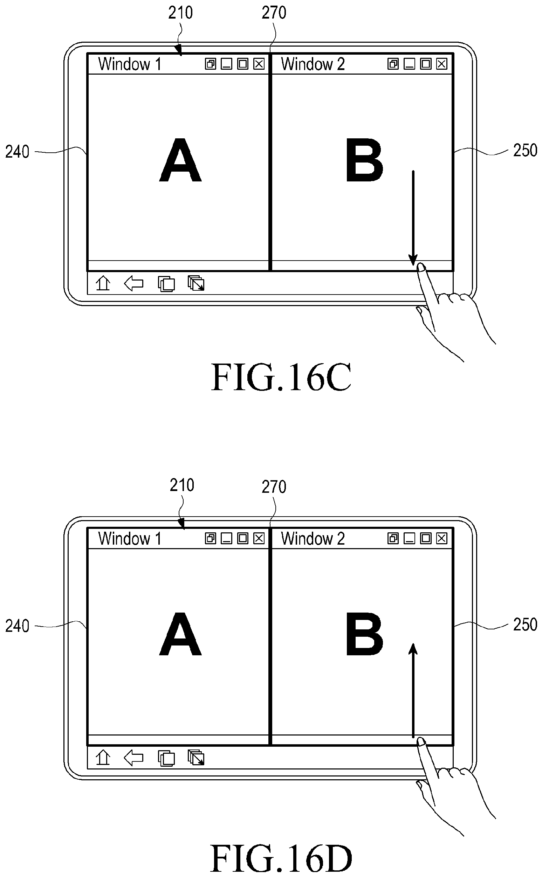

Referring to FIG. 16C, when the user touches the common boundary line 272 and moves the touch down to the bottom edge of the main screen 210, the common boundary line 272 and the bottom side of the second window 250 move together by the moved distance of the touch. The bottom side of the second window 250 is extended to the bottom end of the main screen 210 by the moved distance of the touch. Accordingly, even though all of the first, second, and third applications are executed in the mobile device 100, only the first and second windows 240 and 250 are displayed on the main screen 210 of the touch screen 190, without the third window 260. However, it is possible to display the third window 260 on the touch screen 190 as illustrated in FIG. 16D.

Referring to FIG. 16D, when the user touches the bottom end of the main screen 210 and moves the touch upward, the common boundary line 272 and the bottom side of the second window 250 move together by the moved distance of the touch. Accordingly, the second and third windows 250 and 260 may be displayed together on the main screen 210 as illustrated in FIG. 16A.

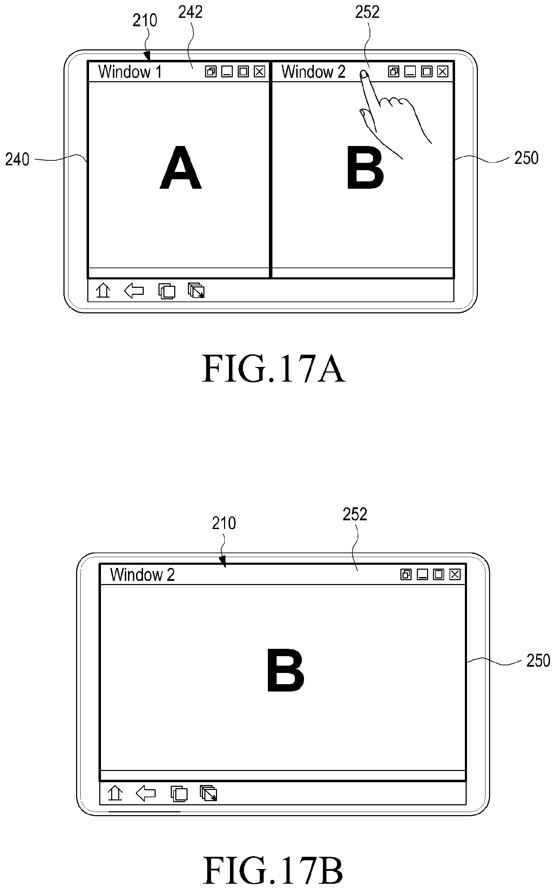

FIGs. 17A to 17D illustrate a method for controlling a screen in which multiple applications are executed in a mobile device according to another exemplary aspect of the present disclosure.

Referring to FIG. 17A, only one of the two windows 240 and 250 may be displayed on the entirety of the main screen 210 by the touch in a state where the two windows 240 and 250 are displayed on the main screen in the split mode. For example, the controller 110 identifies the touch generated by performing a double tap on the title bar 252 of the second window 250, and may display the second window 250 on the entirety of the main screen 210 as illustrated in FIG. 17B. The double tap refers to a gesture of lightly and shortly tapping the touch screen 190 with one finger two times. When the object B included in the second application within the second window 250 is touched, a function or an event corresponding to the object B is executed in the second application. Accordingly, in order to change the size of the second window 250, an area which does not influence the object B, that is, the title bar 252 may be used.

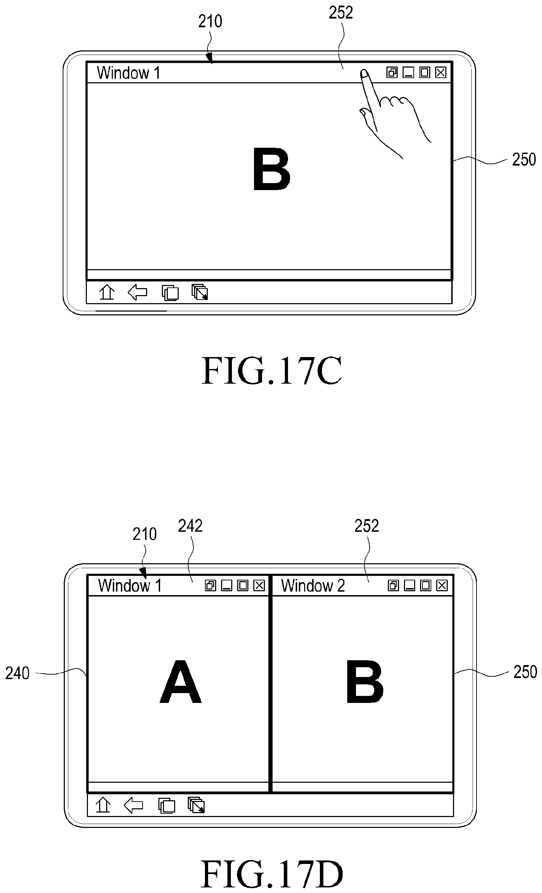

Therefore, even though both the first and second applications are executed in the mobile device 100, only the second window 250 is displayed on the main screen 210, without the first window 240. However, as illustrated in FIG. 17C, it is possible to display the third window 260 on the touch screen 190. In response to a double-tap touch on the title bar 252 of the second window 250 displayed on the entirety of the main screen 210, the controller 110 may display the first window 240 and the second window 250 to the same size on the main screen 210 as illustrated in FIG. 17D.

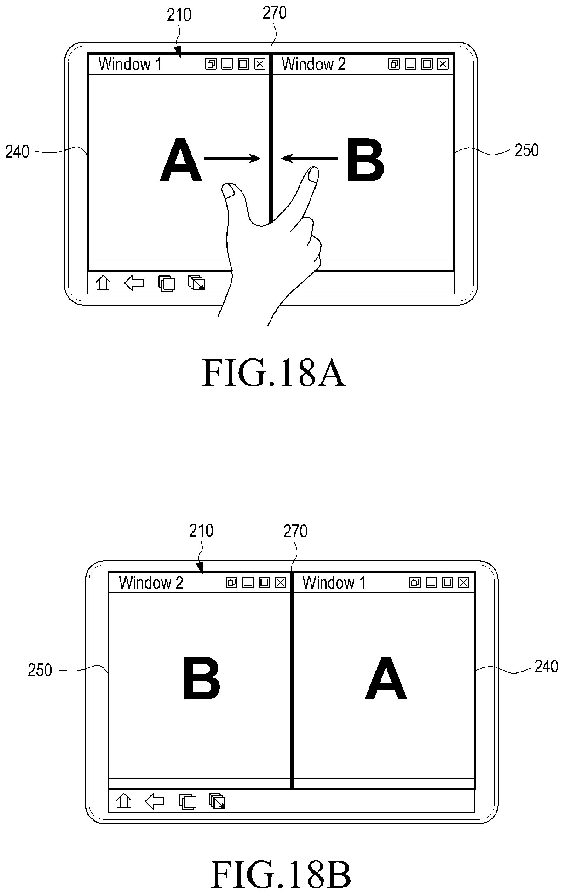

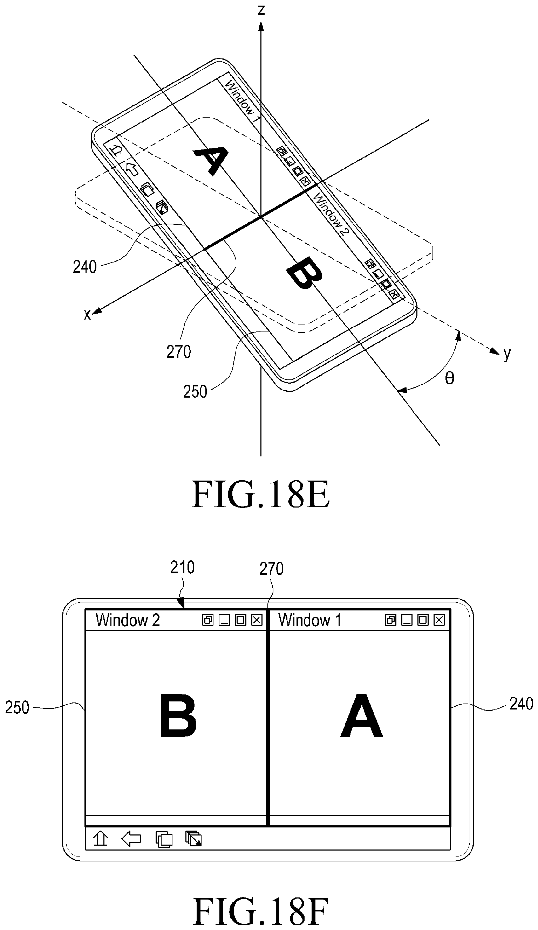

FIGs. 18A to 18F illustrate a method for controlling a screen in which multiple applications are executed in the mobile device according to another exemplary aspect of the present disclosure.

Referring to FIG. 18A, with the two windows 240 and 250 displayed on the main screen 210 in the split mode, the user may switch the displayed positions of the two windows 240 and 250 by a touch.

For example, in response to a pinch gesture made with respect to the common boundary line 270, the controller 110 may switch the display positions of the first and second windows 240 and 250. A pinch is a gesture of moving two fingers' touch (for example, a touch made with a thumb and an index finger) in opposite directions on the touch screen 190.

In FIG. 18A, the first window 240 is displayed at the left side of the common boundary line 270, and the second window 250 is displayed at the right side of the common boundary line 270. Further, while the user touches a point in the first window 240 with the thumb and a point in the second window 250 with the index finger, the user brings the two fingers together horizontally close to the common boundary line 270. Then, the controller 110 identifies the touches of the fingers and displays the first and second windows 240 and 250 at the right and left sides of the common boundary line 270, respectively, as illustrated in FIG. 18B. In this manner, even a user who is not skilled in using a UI in the mobile device 100 can readily switch the positions of the first and second windows 240 and 250 by making a gesture of crossing his/her two fingers on the touch screen 190.

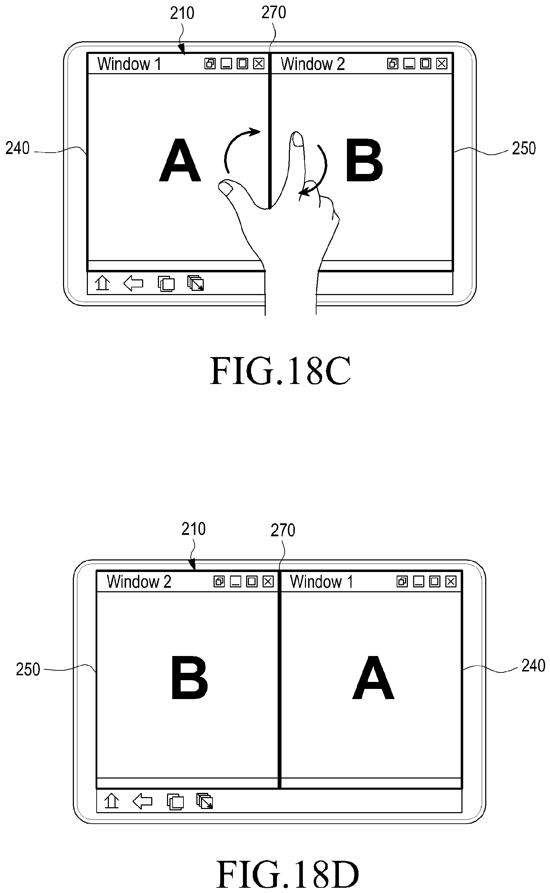

Referring to FIG. 18C, the first window 240 is displayed at the left side of the common boundary line 270, and the second window 250 is displayed at the right side of the common boundary line 270. In this state, the user rotates the thumb's touch on one point in the first window 240 and the index finger's touch on one point in the second window 250, clockwise in a circle. While the user is drawing the circle, the gap between the two fingers may get smaller. In response to the touches of the fingers, the controller 110 displays the first window 240 at the right side of the common boundary line 270 and the second window 250 at the left side of the common boundary line 270 as illustrated in FIG. 18D. In this manner, even a user who is not skilled in using a UI of the mobile device 100 can readily switch the positions of the first and second windows 240 and 250 by intuitively making a gesture of rotating his/her two fingers on the touch screen 190.

Referring to FIG. 18E, with the two windows 240 and 250 displayed on the main screen 210 in the split mode, the controller 110 may identify a motion of the mobile device 100 and thus switch the displayed positions of the two windows 240 and 250 by the user's touch.

In FIG. 18E, in a state where the mobile device 100 is placed evenly on a horizontal plane (an x-y plane), the first window 240 is displayed at the left side of the common boundary line 270 and the second window 250 is displayed at the right side of the common boundary line 270. When the user inclines the mobile device 100 at a predetermined angle θ from the horizontal plane (the x-y plane), the controller 110 identifies the inclination of the mobile device 100 through the sensor module 170 and thus displays the first and second windows 240 and 250 respectively at the right and left sides of the common boundary line 270. In this manner, even a user who is not skilled in using a UI can readily switch the positions of the first and second windows 240 and 250 simply by inclining the mobile device 100 intuitively. The predetermined angle θ may be 45 to 90 degrees. While it has been described in FIG. 18E that the right end of the mobile device 100 is inclined downward (in a -z direction) by way of example, the displayed positions of the first and second windows 240 and 250 may also be switched by inclining the right end of the mobile device 100 upward toward a vertical top direction (in a +z direction).

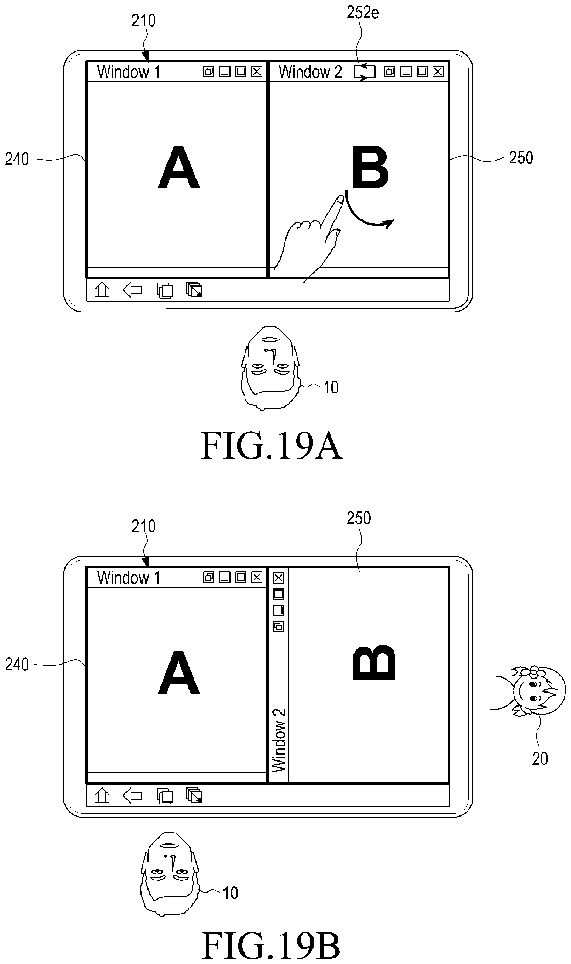

FIGs. 19A to 19D illustrate a method for controlling a screen in which multiple applications are executed in the mobile device according to another exemplary aspect of the present disclosure.

Referring to FIGs. 19A to 19D, with the two windows 240 and 250 displayed on the main screen 210 of the mobile device 100 in the split mode, the user may rotate the two windows 240 and 250 by a touch.

Referring to FIG. 19A, the first window 240 and the second window 250 are arranged with respect to a first user 10. The arrangement of the first and second windows 240 and 250 with respect to the first user 10 means that the first and second windows 240 and 250 are arranged in a direction that the first user 10 generally views and conveniently recognizes objects A or B including text displayed in the first window 240 or the second window 250 as illustrated in FIG. 19A.

In this state, the first user 10 touches the second window 240 and then makes a gesture of counterclockwise rotating his/her finger touch by 90 degrees. In response to the rotation gesture, the controller 110 counterclockwise rotates the second window 250 by 90 degrees in correspondence with the gesture of the first user 10 so that the second window 250 is arranged with respect to a second user 20. Similarly, when a screen rotation button 252e formed in the title bar 252 of the second window 250 is touched, the controller 110 may also rotate the second window 250 counterclockwise by 90 degrees and then display the rotated second window 250.

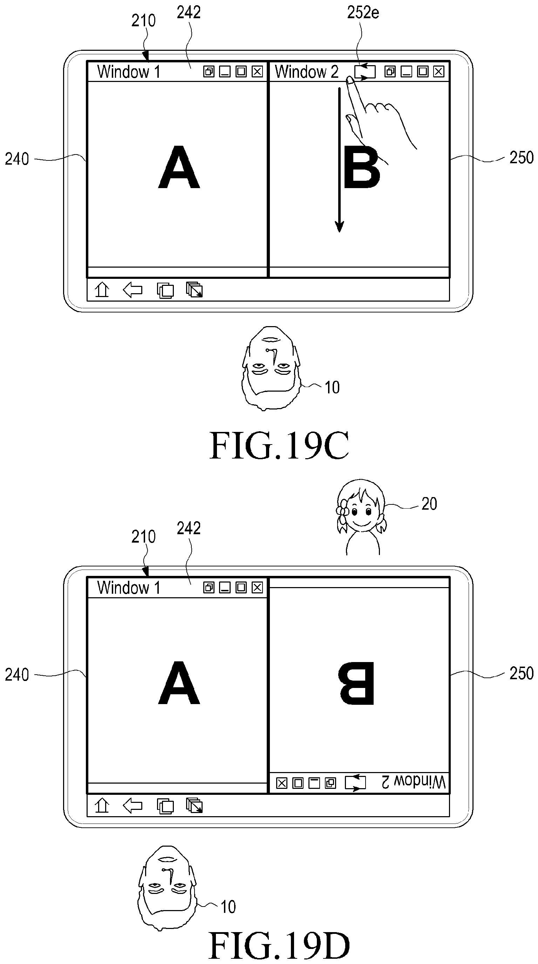

Referring to FIG. 19C, with the first and second windows 240 and 250 displayed with respect to the first user 10, the first user 10 makes a gesture of touching the title bar 250 of the second window 250 and then dragging the touch downward. Then, the controller 110 identifies the touch-and-drag gesture and rotates the second window 250 by 180 degrees in correspondence with the gesture of the first user 10 so that the second window 250 may be arranged with respect to the second user 20 as illustrated in FIG. 19D. In response to a touch gesture of counterclockwise rotating the second window 250 or a touch on the screen rotation button 252e in the title bar 252 of the second window 250, the controller 110 may rotate the second window 250 counterclockwise by 180 degrees and then display the rotated second window 250.

As described above, the first window 240 may be arranged with respect to the first user 10, and the second window 250 may be arranged with respect to the second user 20. The first user 10 may view a first application in the first window 240 from a first direction or may perform a function corresponding to the first application by touching the object A. In addition, the second user 20 may view a second application in the second window 250 from a direction rotated by 90 degrees or 180 degrees from the first direction or may perform a function corresponding to the second application by touching the object B. Accordingly, the plurality of users 10 and 20 may use different applications on the single mobile device 100 and the single touch screen 190.

As is apparent from the above description of the present invention and aspects of the present disclosure, a plurality of applications can be executed fast through a simple UI in a mobile device. In addition, the layout and screen sizes of a plurality of applications can be efficiently controlled on a touch screen.

The methods according to the illustrative embodiments of the present invention and aspects of the present disclosure may be implemented into a program command which can be executed by various computer means and may be recorded in a non-transitory computer-readable medium. The computer-readable medium may include a program command, a data file, a data structure and the like alone or in combination thereof. The program command recorded in the medium may be one specially designed or constructed for the present invention or one known to and then used by those skilled in the computer software art.

While the present invention has been shown and described with reference to exemplary embodiments thereof, it will be understood by those skilled in the art that various changes in form and details may be made therein without departing from the scope of the present invention as defined by the following claims.

## Claims

1. A mobile device (100) for executing multiple applications, the device comprising:
a touch screen (190) configured to display in a multi-application panel (280) a plurality of main application icons (281, 282, 283, 284) representing a respective plurality of main applications, and corresponding to a respective plurality of multi-application sets, each multi-application set having the main application represented by the main application icon and at least one sub-application related to the main application; and
a controller configured to, after the main application icons are displayed, in response to a touch on one of the displayed main application icons, display in a sub-application panel (285) at least one sub-application icon (285a, 285b, 285c, 285d, 285e) representing the at least one sub-application of the multi-application set corresponding to the touched main application icon, and
after the at least one sub-application icon is displayed, in response to a touch on a first sub-application icon of the at least one displayed sub-application icon execute simultaneously the main application and the first sub-application represented by the touched main application icon and first sub-application icon.

2. The mobile device of claim 1,
wherein the main application and the at least one sub-application are independent programs, and
wherein the main application and the at least one sub-application are independently executable and displayable on the touch screen.

3. The mobile device of claim 1, wherein the main application and the at least one sub-application include a plurality of applications selected from among a Web browser application for accessing the Internet and searching for information on the Internet, a message application for transmitting a Short Message Service (SMS) message or a Multimedia Message Service (MMS) message, a Social Networking Service (SNS) application, a music application for playing music, an e-mail application for e-mail transmission and reception, and a video application for playing a video.

4. The mobile device of claim 1, wherein when the main application and the first sub-application are executed simultaneously, the controller is configured to display the main application and the first sub-application on the touch screen in a predetermined layout.

5. The mobile device of claim 4,
wherein the predetermined layout is an overlap mode, and
wherein the controller is further configured to overlap a portion of a first window in which the main application is executed with a second window in which the first sub-application is executed on the touch screen in the overlap mode.

6. A method for executing multiple applications in a mobile device (100), the method comprising:
displaying in a multi-application panel (280) a plurality of main application icons (281, 282, 283, 284) representing a respective plurality of main applications, and corresponding to a respective plurality of multi-application sets, each multi-application set having the main application represented by the main application icon and at least one sub-application related to the main application; and
after the main application icons are displayed, in response to a touch on one of the main application icons, displaying in a sub-application panel (285) at least one sub-application icon (285a, 285b, 285c, 285d, 285e) representing the at least one sub-application of the multi-application set corresponding to the touched main application icon; and
after displaying the at least one sub-application icon, in response to a touch on a first sub-application icon of the at least one displayed sub-application icon, executing simultaneously the main application and the first sub-application represented by the touched main application icon and the touched first sub-application icon.

7. The method of claim 6,
wherein the main application and the at least one sub-application are independent programs, and
wherein the main application and the at least one sub-application are independently executable and displayable on the touch screen.

8. The method of claim 6, wherein the main application and the at least one sub-application include a plurality of applications selected from among a Web browser application for accessing the Internet and searching for information on the Internet, a message application for transmitting a Short Message Service (SMS) message or a Multimedia Message Service (MMS) message, a Social Networking Service (SNS) application, a music application for playing music, an e-mail application for e-mail transmission and reception, and a video application for playing a video.

9. The method of claim 6, wherein when one of the main application and the first sub-application are executed simultaneously, the main application and the first sub-application are displayed on the touch screen in a predetermined layout.

10. The method of claim 9, wherein the predetermined layout is an overlap mode in which a portion of a first window in which the main application is executed is overlapped with a second window in which the sub-application is executed on the touch screen.

11. The method of claim 9, wherein the predetermined layout is a split mode in which a first window in which the main application is executed and a second window in which the sub-application is executed are displayed in different areas of the touch screen.

12. The method of claim 11, wherein the first and second windows share a common boundary line, and the first window is contracted and the second window is enlarged according to a continuous movement of a touch in a first direction with respect to the common boundary line.

13. The method of any one of claims 10 to 12, further comprising:
in response to a predetermined touch, rotating the second window to an orientation different from the first window.

## Patentansprüche

1. Mobiles Gerät (100) zum Ausrühren mehrerer Anwendungen, wobei das Gerät umfasst:
einen Touchscreen (190), der konfiguriert ist, um in einem Mehrfachanwendungsfeld (280) eine Vielzahl von Hauptanwendungssymbolen (281, 282, 283, 284) anzuzeigen, die eine jeweilige Vielzahl von Hauptanwendungen darstellen und einer jeweiligen Vielzahl von Mehrfachanwendungssätzen entsprechen, wobei jeder Mehrfachanwendungssatz die Hauptanwendung durch das Hauptanwendungssymbol und mindestens eine Unteranwendung in Zusammenhang mit der Hauptanwendung darstellt; und
eine Steuerung, die konfiguriert ist, um, nachdem die Hauptanwendungssymbole angezeigt wurden, als Reaktion auf eine Berührung auf eines der angezeigten Hauptanwendungssymbole, in einem Unteranwendungsfeld (285) mindestens ein Unteranwendungssymbol (285a, 285b, 285c, 285d, 285e) anzuzeigen, das die mindestens eine Unteranwendung des Mehrfachanwendungssatzes darstellt, die dem berührten Hauptanwendungssymbol entspricht, und
nachdem das mindestens eine Unteranwendungssymbol angezeigt wurde, als Reaktion auf eine Berührung auf ein erstes Unteranwendungssymbol des mindestens einen angezeigten Unteranwendungssymbols, gleichzeitig die Hauptanwendung und die erste Unteranwendung auszuführen, die durch das berührte Hauptanwendungssymbol und das erste Unteranwendungssymbol dargestellt werden.

2. Mobiles Gerät nach Anspruch 1, wobei die Hauptanwendung und die mindestens eine Unteranwendung unabhängige Programme sind und wobei die Hauptanwendung und die mindestens eine Unteranwendung unabhängig voneinander ausführbar und auf dem Touchscreen anzeigbar sind.

3. Mobiles Gerät nach Anspruch 1, wobei die Hauptanwendung und die mindestens eine Unteranwendung eine Vielzahl von Anwendungen umfassen, die aus einer Webbrowseranwendung zum Zugreifen auf das Internet und Suchen nach Informationen im Internet, einer Nachrichtenanwendung zum Senden einer Short Message Service- (SMS-) Nachricht oder einer Multimedia Message Service- (MMS-) Nachricht, einer Social Networking Service- (SNS-) Anwendung, einer Musikanwendung zum Abspielen von Musik, einer E-Mail-Anwendung zum Senden und Empfangen von E-Mails und einer Videoanwendung zum Abspielen eines Videos ausgewählt sind.

4. Mobiles Gerät nach Anspruch 1, wobei, wenn die Hauptanwendung und die erste Unteranwendung gleichzeitig ausgeführt werden, die Steuerung konfiguriert ist, um die Hauptanwendung und die erste Unteranwendung auf dem Touchscreen in einem vorbestimmten Layout anzuzeigen.

5. Mobiles Gerät nach Anspruch 4, wobei das vorbestimmte Layout ein Überlappungsmodus ist und wobei die Steuerung ferner konfiguriert ist, um einen Teil eines ersten Fensters, in dem die Hauptanwendung ausgeführt wird, mit einem zweiten Fenster zu überlappen, in dem die erste Unteranwendung auf dem Touchscreen im Überlappungsmodus ausgeführt wird.

6. Verfahren zum Ausführen mehrerer Anwendungen in einem mobilen Gerät (100), wobei das Verfahren umfasst:
Anzeigen, in einem Mehrfachanwendungsfeld (280), einer Vielzahl von Hauptanwendungssymbolen (281, 282, 283, 284), die eine jeweilige Vielzahl von Hauptanwendungen darstellen und einer jeweiligen Vielzahl von Mehrfachanwendungssätzen entsprechen, wobei jeder Mehrfachanwendungssatz die Hauptanwendung durch das Hauptanwendungssymbol und mindestens eine Unteranwendung in Zusammenhang mit der Hauptanwendung darstellt; und
nachdem die Hauptanwendungssymbole angezeigt wurden, als Reaktion auf eine Berührung auf eines der Hauptanwendungssymbole, Anzeigen, in einem Unteranwendungsfeld (285), mindestens eines Unteranwendungssymbols (285a, 285b, 285c, 285d, 285e), das die mindestens eine Unteranwendung des Mehrfachanwendungssatzes darstellt, die dem berührten Hauptanwendungssymbol entspricht, und
nach dem Anzeigen des mindestens einen Unteranwendungssymbols, als Reaktion auf eine Berührung auf ein erstes Unteranwendungssymbol des mindestens einen angezeigten Unteranwendungssymbols, gleichzeitiges Ausführen der Hauptanwendung und der ersten Unteranwendung, die durch das berührte Hauptanwendungssymbol und das berührte erste Unteranwendungssymbol dargestellt werden.

7. Verfahren nach Anspruch 6, wobei die Hauptanwendung und die mindestens eine Unteranwendung unabhängige Programme sind und wobei die Hauptanwendung und die mindestens eine Unteranwendung unabhängig voneinander ausführbar und auf dem Touchscreen anzeigbar sind.

8. Verfahren nach Anspruch 6, wobei die Hauptanwendung und die mindestens eine Unteranwendung eine Vielzahl von Anwendungen umfassen, die aus einer Webbrowseranwendung zum Zugreifen auf das Internet und Suchen nach Informationen im Internet, einer Nachrichtenanwendung zum Senden einer Short Message Service- (SMS-) Nachricht oder einer Multimedia Message Service- (MMS-) Nachricht, einer Social Networking Service- (SNS-) Anwendung, einer Musikanwendung zum Abspielen von Musik, einer E-Mail-Anwendung zum Senden und Empfangen von E-Mails und einer Videoanwendung zum Abspielen eines Videos ausgewählt sind.

9. Verfahren nach Anspruch 6, wobei, wenn eine von der Hauptanwendung und der ersten Unteranwendung gleichzeitig ausgeführt wird, die Hauptanwendung und die erste Unteranwendung auf dem Touchscreen in einem vorbestimmten Layout angezeigt werden.

10. Verfahren nach Anspruch 9, wobei das vorbestimmte Layout ein Überlappungsmodus ist, in dem ein Teil eines ersten Fensters, in dem die Hauptanwendung ausgeführt wird, mit einem zweiten Fenster überlappt, in dem die Unteranwendung auf dem Touchscreen ausgeführt wird.

11. Verfahren nach Anspruch 9, wobei das vorbestimmte Layout ein Teilungsmodus ist, in dem ein erstes Fenster, in dem die Hauptanwendung ausgeführt wird, und ein zweites Fenster, in dem die Unteranwendung ausgeführt wird, in verschiedenen Bereichen des Touchscreens angezeigt werden.

12. Verfahren nach Anspruch 11, wobei das erste und das zweite Fenster eine gemeinsame Grenzlinie teilen und das erste Fenster zusammengezogen wird und das zweite Fenster gemäß einer kontinuierlichen Bewegung einer Berührung in einer ersten Richtung in Bezug auf die gemeinsame Grenzlinie vergrößert wird.

13. Verfahren nach einem der Ansprüche 10 bis 12, ferner umfassend:
als Reaktion auf eine vorbestimmte Berührung, Drehen des zweiten Fensters in eine andere Ausrichtung als das erste Fenster.

## Revendications

1. Dispositif mobile (100) destiné à exécuter de multiples applications, le dispositif comprenant :
un écran tactile (190) configuré pour afficher dans un panneau multiapplication (280) une pluralité d'icônes d'application principale (281, 282, 283, 284) représentant une pluralité respective d'applications principales, et correspondant à une pluralité respective d'ensembles multiapplications, chaque ensemble multiapplication possédant l'application principale représentée par l'icône d'application principale et au moins une sous-application liée à l'application principale ; et
un dispositif de commande configuré pour, après l'affichage des icônes d'application principale, en réponse à un toucher sur l'une des icônes d'application principale affichées, afficher dans un panneau de sous-application (285) au moins une icône de sous-application (285a, 285b, 285c, 285d, 285e) représentant l'au moins une sous-application de l'ensemble multiapplication correspondant à l'icône d'application principale touchée, et
après l'affichage de l'au moins une icône de sous-application, en réponse à un toucher sur une première icône de sous-application de l'au moins une icône de sous-application affichée, exécuter simultanément l'application principale et la première sous-application représentée par l'icône d'application principale touchée et la première icône de sous-application.

2. Dispositif mobile selon la revendication 1, ladite application principale et ladite au moins une sous-application étant des programmes indépendants, et ladite application principale et ladite au moins une sous-application pouvant être indépendamment exécutées et affichées sur l'écran tactile.

3. Dispositif mobile selon la revendication 1, ladite application principale et ladite au moins une sous-application comprenant une pluralité d'applications sélectionnées parmi une application de navigateur web permettant d'accéder à internet et de rechercher des informations sur internet, une application de messagerie destinée à transmettre un message de service de messages courts (SMS) ou un message de service de messagerie multimédia (MMS), une application de service de réseautage social (SNS), une application musicale pour écouter de la musique, une application de courrier électronique destinée à l'émission et la réception de courrier électronique et une application vidéo pour la lecture d'une vidéo.

4. Dispositif mobile selon la revendication 1, lorsque l'application principale et la première sous-application sont exécutées simultanément, ledit dispositif de commande étant configuré pour afficher l'application principale et la première sous-application sur l'écran tactile dans une disposition prédéfinie.

5. Dispositif mobile selon la revendication 4, ladite disposition prédéfinie étant un mode de chevauchement, et ledit dispositif de commande étant en outre configuré pour chevaucher une partie d'une première fenêtre dans laquelle l'application principale est exécutée avec une seconde fenêtre dans laquelle la première sous-application est exécutée sur l'écran tactile dans le mode de chevauchement.

6. Procédé permettant d'exécuter de multiples applications dans un dispositif mobile (100), le procédé comprenant :
l'affichage dans un panneau multiapplication (280) d'une pluralité d'icônes d'application principale (281, 282, 283, 284) représentant une pluralité respective d'applications principales, et correspondant à une pluralité respective d'ensembles multiapplications, chaque ensemble multiapplication possédant l'application principale représentée par l'icône d'application principale et au moins une sous-application liée à l'application principale ; et
après l'affichage des icônes d'application principale, en réponse à un toucher sur l'une des icônes d'application principale, l'affichage dans un panneau de sous-application (285) d'au moins une icône de sous-application (285a, 285b, 285c, 285d, 285e) représentant l'au moins une sous-application de l'ensemble multiapplication correspondant à l'icône d'application principale touchée ; et
après l'affichage de l'au moins une icône de sous-application, en réponse à un toucher sur une première icône de sous-application de l'au moins une icône de sous-application affichée, l'exécution simultanée de l'application principale et de la première sous-application représentée par l'icône de l'application principale touchée et la première icône de sous-application touchée.

7. Procédé selon la revendication 6, ladite application principale et ladite au moins une sous-application étant des programmes indépendants, et ladite application principale et ladite au moins une sous-application pouvant être indépendamment exécutées et affichées sur l'écran tactile.

8. Procédé selon la revendication 6, ladite application principale et ladite au moins une sous-application comprenant une pluralité d'applications sélectionnées parmi une application de navigateur web permettant d'accéder à internet et de rechercher des informations sur internet, une application de messagerie destinée à transmettre un message de service de messages courts (SMS) ou un message de service de messagerie multimédia (MMS), une application de service de réseautage social (SNS), une application musicale pour écouter de la musique, une application de courrier électronique destinée à l'émission et à la réception de courriers électroniques et une application vidéo pour la lecture d'une vidéo.

9. Procédé selon la revendication 6, lorsque l'une de l'application principale et de la première sous-application sont exécutées simultanément, ladite application principale et ladite première sous-application étant affichées sur l'écran tactile dans une disposition prédéfinie.

10. Procédé selon la revendication 9, ladite disposition prédéfinie étant un mode de chevauchement dans lequel une partie d'une première fenêtre dans laquelle l'application principale est exécutée chevauche une seconde fenêtre dans laquelle la sous-application est exécutée sur l'écran tactile.

11. Procédé selon la revendication 9, ladite disposition prédéfinie étant un mode divisé dans lequel une première fenêtre dans laquelle l'application principale est exécutée et une seconde fenêtre dans laquelle la sous-application est exécutée sont affichées dans différentes zones de l'écran tactile.

12. Procédé selon la revendication 11, lesdites première et seconde fenêtres partageant une ligne frontière commune, et ladite première fenêtre étant contractée et ladite seconde fenêtre étant agrandie selon un déplacement continu d'un toucher dans une première direction par rapport à la ligne frontière commune.

13. Procédé selon l'une quelconque des revendications 10 à 12, comprenant en outre :
en réponse à un toucher prédéfini, la rotation de la seconde fenêtre dans une orientation différente de la première fenêtre.
